(19) Europäisches Patentamt / European Patent Office / Office européen des brevets

(11) **EP 4 181 537 B1**

(12) **EUROPEAN PATENT SPECIFICATION**

(45) Date of publication and mention of the grant of the patent:
**24.12.2025 Bulletin 2025/52**

(21) Application number: **21846744.7**

(22) Date of filing: **20.07.2021**

(51) International Patent Classification (IPC):
***H04W 4/02*** *(2018.01)*

(52) Cooperative Patent Classification (CPC):
**H04W 4/02; H04W 4/023**

(86) International application number:
**PCT/CN2021/107437**

(87) International publication number:
**WO 2022/017397 (27.01.2022 Gazette 2022/04)**

(54) **MULTI-PATH SINGLE ANCHOR POINT POSITIONING METHOD AND COMMUNICATION APPARATUS**

MEHRWEG-EINZELANKERPUNKTPOSITIONIERUNGSVERFAHREN UND KOMMUNIKATIONSVORRICHTUNG

PROCÉDÉ DE POSITIONNEMENT DE POINT D'ANCRAGE UNIQUE À MULTIPLES CHEMINS ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2020 CN 202010725675**
**29.10.2020 CN 202011183286**

(43) Date of publication of application:
**17.05.2023 Bulletin 2023/20**

(73) Proprietor: **Huawei Technologies Co., Ltd.**
**Shenzhen, Guangdong 518129 (CN)**

(72) Inventors:
• **HUANG, Wei**
**Shenzhen, Guangdong 518129 (CN)**
• **LI, Xueru**
**Shenzhen, Guangdong 518129 (CN)**
• **PENG, Lan**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
CN-A- 104 662 436     CN-A- 104 662 436
CN-A- 110 012 536     US-A1- 2017 026 798
US-A1- 2019 380 054

• CATT: "UE and gNB measurements for NR Positioning", 3GPP TSG RAN WG1 #99 R1-1912146, 22 November 2019 (2019-11-22), XP051823228

Description

## TECHNICAL FIELD

This application relates to the field of positioning technologies, and in particular, to a multipath single-anchor positioning method and a multipath single-anchor positioning system.

## BACKGROUND

Document CN 104 662 436 A describes a positioning method, which comprises: a positioning server determining positioning signal configuration information; the positioning server sending the positioning signal configuration information to a positioning signal sending entity; the positioning server obtaining a measurement estimation result of a shortest transmission path between a positioning signal measurement entity and the positioning signal sending entity; and the positioning server using the measurement estimation result of the shortest transmission path to position a terminal, wherein the terminal is one of the positioning signal measurement entity and the positioning signal sending entity.

Document US 2017/026798 A1 discloses a method for determining a location of a user equipment in a wireless system.

Existing vertical industries including Internet of Vehicles (IoV), intelligent driving, indoor navigation and positioning, smart factory, intelligent warehousing, and the like have high requirements for high-precision positioning. In addition to these vertical industries, consumer terminal devices also have new requirements for high-precision positioning, including object positioning and tracking, precise data transmission, smart payment, smart push, smart key, and the like.

To reduce anchor deployment costs in multi-anchor positioning and a problem of insufficient anchor positioning resources, a single-anchor positioning technology is currently proposed in the industry, that is, user equipment (user equipment, UE) positioning can be implemented by using only one anchor. However, in a multipath positioning environment, times of arrival and angle information of signals on different transmission paths are different. If single-anchor positioning is performed based on distance measurement information and angle information of different paths, positioning precision cannot be ensured. Therefore, how to ensure that angle information and distance information on a same path are used for UE positioning becomes a key to ensure single-anchor positioning precision.

## SUMMARY

The invention is defined by the claims.

This application provides a multipath single-anchor positioning method and a multipath single-anchor positioning system according to the independent claims. A reference node measures positioning information based on an indication of a to-be-positioned node and based on a same transmission path as that used by the to-be-positioned node, to resolve a problem of low positioning precision caused by inconsistency between positioning information of the to-be-positioned node and the positioning information of the reference node.

According to a first aspect, the steps of the inventive multipath single-anchor positioning method perfomed by the to-be-positioned node include: receiving a first positioning measurement reference signal transmitted through N transmission paths, where the first positioning measurement reference signal is sent by a reference node, and N is an integer greater than 1; measuring first positioning information based on the first positioning measurement reference signal on a first transmission path, where the first transmission path is one of the N transmission paths; and sending first indication information and a second positioning measurement reference signal to the reference node, where the first indication information is used to indicate the first transmission path, so that the reference node measures second positioning information on the first transmission path.

According to the multipath single-anchor positioning method provided in embodiments of this application, the to-be-positioned node indicates, to the reference node, a transmission path corresponding to positioning information measured by the to-be-positioned node, so that the reference node measures positioning information based on a same transmission path. This can ensure that the to-be-positioned node and the reference node complete positioning information measurement based on the same transmission path, to reduce multipath impact and improve positioning accuracy when the to-be-positioned node is positioned.

With reference to the first aspect, in some implementations of the first aspect, the first transmission path is a first-arrival path or a strongest path. The first positioning measurement reference signal has a lowest transmission delay on the first-arrival path, and the first positioning measurement reference signal has smallest attenuation on the strongest path. The method further includes: determining the first transmission path based on a transmission delay and/or a signal power of the first positioning measurement reference signal.

It should be understood that, because a signal transmission delay on the first-arrival path is lowest, and time of arrival information of the first-arrival path is most accurate, accurate distance measurement information can be obtained based on the first-arrival path. Moreover, because a signal strength on the strongest path is highest, and an error of angle information corresponding to the strongest path is smallest, accurate angle information can be obtained based on the strongest path.

In an implementation, if the first-arrival path and the strongest path are a same transmission path, accurate distance measurement information and angle information may be obtained based on the first-arrival path/the strongest path, to ensure positioning accuracy.

In an implementation, if the first-arrival path and the strongest path are two different transmission paths, a tradeoff may be made between the first-arrival path and the strongest path according to a specific determining criterion, to select a transmission path that can reduce a positioning error for positioning information measurement.

According to the multipath single-anchor positioning method provided in embodiments of this application, positioning information is measured by using the first-arrival path or the strongest path, so that positioning accuracy can be ensured in a multipath environment.

With reference to the first aspect, in some implementations of the first aspect, that the first indication information is represented by 1-bit information, and the first indication information is used to indicate information about the first transmission path includes: When the first transmission path is the first-arrival path, the first indication information is 1. When the first transmission path is the strongest path, the first indication information is 0. Alternatively, when the first transmission path is the first-arrival path, the first indication information is 0. When the first transmission path is the strongest path, the first indication information is 1.

The measuring first positioning information based on the first positioning measurement reference signal on a first transmission path includes: recording a first arrival moment T2 of the first positioning measurement reference signal; and measuring a first angle of arrival AOA1 of the first positioning measurement reference signal.

The method further includes: recording a first sending moment T3 of the second positioning measurement reference signal; and/or measuring a first angle of departure AOD1 of the second positioning measurement reference signal.

The method further includes: sending third positioning information to a location service node. The third positioning information includes: the first arrival moment T2 and the first sending moment T3; a difference T3 - T2 between the first sending moment T3 and the first arrival moment T2; the first arrival moment T2, the first sending moment T3, and the first angle of arrival AOA1 and/or the first angle of departure AOD1; or a difference T3 - T2 between the first sending moment T3 and the first arrival moment T2, and the first angle of arrival AOA1 and/or the first angle of departure AOD1.

With reference to the first aspect, in some implementations of the first aspect, the first indication information is carried in channel state information.

With reference to the first aspect, in some implementations of the first aspect, the channel state information further includes but is not limited to: precoding matrix indicator PMI information, channel quality indicator CQI information, and rank indicator RI information of a channel matrix.

According to a second aspect, the steps of the inventive multipath single-anchor positioning method performed by the reference node include: sending a first positioning measurement reference signal, where the first positioning measurement reference signal is transmitted to a to-be-positioned node through N transmission paths, and N is an integer greater than 1; receiving first indication information and a second positioning measurement reference signal that are sent by the to-be-positioned node, where the first indication information is used to indicate a first transmission path, and the first transmission path is one of the N transmission paths; and measuring second positioning information on the first transmission path based on the first indication information.

According to the multipath single-anchor positioning method provided in embodiments of this application, the to-be-positioned node indicates, to the reference node, a beam corresponding to measurement information used when the to-be-positioned node measures positioning information, so that the reference node completes positioning information measurement based on same measurement information. This can ensure that positioning information measured by the to-be-positioned node and the reference node corresponds to a transmission path in a same beam, to avoid multipath interference of another beam and ensure positioning information accuracy in a multipath environment.

With reference to the second aspect, in some implementations of the second aspect, the first transmission path is a first-arrival path or a strongest path. The first positioning measurement reference signal has a lowest transmission delay on the first-arrival path, and the first positioning measurement reference signal has smallest attenuation on the strongest path.

It should be understood that, because a signal transmission delay on the first-arrival path is lowest, and time of arrival information of the first-arrival path is most accurate, accurate distance measurement information can be obtained based on the first-arrival path. Moreover, because a signal strength on the strongest path is highest, and an error of angle information corresponding to the strongest path is smallest, accurate angle information can be obtained based on the strongest path.

In an implementation, if the first-arrival path and the strongest path are a same transmission path, accurate distance measurement information and angle information may be obtained based on the first-arrival path/the strongest path, to ensure positioning accuracy.

In an implementation, if the first-arrival path and the strongest path are two different transmission paths, a tradeoff may be made between the first-arrival path and the strongest path according to a specific determining criterion, to select a transmission path that can reduce a positioning error for positioning information measurement.

According to the multipath single-anchor positioning method provided in embodiments of this application, positioning information is measured by using the first-arrival path or the strongest path, so that positioning accuracy can be ensured in a multipath environment.

With reference to the second aspect, in some implementations of the second aspect, that the first indication information is represented by 1-bit information, and the first indication information is used to indicate information about the first transmission path includes: When the first transmission path is the first-arrival path, the first indication information is 1. When the first transmission path is the strongest path, the first indication information is 0. Alternatively, when the first transmission path is the first-arrival path, the first indication information is 0. When the first transmission path is the strongest path, the first indication information is 1.

The measuring second positioning information on the first transmission path based on the first indication information includes: recording a second arrival moment T4 of the second positioning measurement reference signal; and measuring a second angle of arrival AOA2 of the second positioning measurement reference signal.

The method further includes: recording a second sending moment T1 of the first positioning measurement reference signal; and/or measuring a second angle of departure AOD2 of the first positioning measurement reference signal.

The method further includes: sending fourth positioning information to a location service node. The fourth positioning information includes: the second sending moment T1 and the second arrival moment T4; a difference T4 - T1 between the second arrival moment T4 and the second sending moment T1; the second sending moment T1, the second arrival moment T4, and the second angle of arrival AOA2 and/or the second angle of departure AOD2; or a difference T4 - T1 between the second arrival moment T4 and the second sending moment T1, and the second angle of arrival AOA2 and/or the second angle of departure AOD2.

With reference to the second aspect, in some implementations of the second aspect, the first indication information is carried in channel state information.

With reference to the second aspect, in some implementations of the second aspect, the channel state information further includes but is not limited to: precoding matrix indicator PMI information, channel quality indicator CQI information, and rank indicator RI information of a channel matrix.

According to a third aspect, which is not an embodiment of the present invention but helpful for understanding certain aspects thereof, a multipath single-anchor positioning method is provided, applied to a to-be-positioned node, and the method includes: receiving a first positioning measurement reference signal transmitted through N transmission paths, where the first positioning measurement reference signal is sent by a reference node, and N is an integer greater than 1; measuring first positioning information based on first intermediate information, where the first intermediate information includes a discrete Fourier transform DFT base vector corresponding to a first transmission path in a precoding submatrix, and the first transmission path is one of the N transmission paths; and sending first indication information and a second positioning measurement reference signal to the reference node, where the first indication information is used to indicate the first intermediate information, so that the reference node measures second positioning information based on the first intermediate information indicated by the first indication information.

Optionally, the DFT base vector corresponding to the first transmission path in the precoding submatrix herein may be a projection vector that is associated with the first transmission path and that can project the first positioning measurement reference signal on the first transmission path to delay domain, or to delay domain and angle domain.

It should be understood that the precoding matrix in embodiments of this application may be a matrix including a frequency domain DFT vector or a spatial domain and frequency domain DFT vector selected by the to-be-positioned node from a basic frequency domain vector set or a basic spatial domain and frequency domain vector set.

With reference to the third aspect, in some implementations of the third aspect, that the first indication information is used to indicate the first intermediate information includes: The first indication information includes identification information of the DFT base vector corresponding to the first transmission path in the precoding submatrix.

With reference to the third aspect, in some implementations of the third aspect, that the first indication information includes identification information of the DFT base vector corresponding to the first transmission path in the precoding submatrix includes: The first indication information includes index information of the DFT base vector.

With reference to the third aspect, in some implementations of the third aspect, the precoding submatrix is a submatrix including a frequency domain DFT. Alternatively, the precoding submatrix is a submatrix including a spatial domain and frequency domain two-dimensional DFT base vector.

With reference to the third aspect, in some implementations of the third aspect, the first transmission path is a first-arrival path or a strongest path identified after projection of the DFT base vector. The first positioning measurement reference signal has a lowest transmission delay on the first-arrival path, and the first positioning measurement reference signal has smallest attenuation on the strongest path. The method further includes: determining the first transmission path based on a transmission delay and/or a signal power of the first positioning measurement reference signal.

Obtaining the first positioning information based on the first positioning measurement reference signal on the first transmission path includes: recording an arrival moment T2 of the first positioning measurement reference signal; and measuring an angle of arrival AOA1 of the first positioning measurement reference signal.

The method further includes: recording a sending moment T3 of the second positioning measurement reference signal; and/or measuring an angle of departure AOD1 of the second positioning measurement reference signal.

The method further includes: sending third positioning information to a location service node. The third positioning information includes: the arrival moment T2 and the sending moment T3; a difference T3 - T2 between the sending moment T3 and the arrival moment T2; the arrival moment T2, the sending moment T3, and the angle of arrival AOA1 and/or the angle of departure AOD1; or a difference T3 - T2 between the sending moment T3 and the arrival moment T2, and the angle of arrival AOA1 and/or the angle of departure AOD1.

With reference to the third aspect, in some implementations of the third aspect, the first indication information is carried in channel state information.

With reference to the third aspect, in some implementations of the third aspect, the channel state information further includes but is not limited to: precoding matrix indicator PMI information, channel quality indicator CQI information, and rank indicator RI information of a channel matrix.

According to a fourth aspect, which is not an embodiment of the present invention but helpful for understanding certain aspects thereof, a multipath single-anchor positioning method is provided, applied to a reference node, and the method includes: sending a first positioning measurement reference signal, where the first positioning measurement reference signal is transmitted to a to-be-positioned node through N transmission paths, and N is an integer greater than 1; receiving first indication information and a second positioning measurement reference signal that are sent by the to-be-positioned node, where the first indication information is used to indicate first intermediate information, the first intermediate information includes a discrete Fourier transformation DFT base vector corresponding to a first transmission path in a precoding submatrix, and the first transmission path is one of the N transmission paths; and measuring second positioning information based on the first indication information by using the first intermediate information.

With reference to the fourth aspect, in some implementations of the fourth aspect, that the first indication information is used to indicate the first intermediate information includes: The first indication information includes identification information of the DFT base vector corresponding to the first transmission path in the precoding submatrix.

With reference to the fourth aspect, in some implementations of the fourth aspect, that the first indication information includes identification information of the DFT base vector corresponding to the first transmission path in the precoding submatrix includes: The first indication information includes index information of the DFT base vector.

With reference to the fourth aspect, in some implementations of the fourth aspect, the precoding submatrix is a submatrix including a frequency domain discrete Fourier transformation DFT base vector. Alternatively, the precoding submatrix is a submatrix including spatial domain and frequency domain two-dimensional discrete Fourier transformation DFT base vectors.

With reference to the fourth aspect, in some implementations of the fourth aspect, the first transmission path is a first-arrival path or a strongest path identified after projection of the DFT. The first positioning measurement reference signal has a lowest transmission delay on the first-arrival path, and the first positioning measurement reference signal has smallest attenuation on the strongest path.

The measuring second positioning information based on the first measurement information includes: recording an arrival moment T4 of the second positioning measurement reference signal; and measuring an angle of arrival AOA2 of the second positioning measurement reference signal.

The method further includes: recording a sending moment T1 of the first positioning measurement reference signal; and/or measuring an angle of departure AOD2 of the first positioning measurement reference signal.

The method further includes: sending fourth positioning information to a location service node. The fourth positioning information includes second time information. Alternatively, the fourth positioning information includes second time information and second angle information. The second time information includes: the arrival moment T4 of the second positioning measurement reference signal and the sending moment T1 of the first positioning measurement reference signal; or a difference T4 - T1 between the arrival moment T4 of the second positioning measurement reference signal and the sending moment T1 of the first positioning measurement reference signal. The second angle information includes: the angle of arrival AOA2 of the second positioning measurement reference signal, and/or the angle of departure AOD2 of the first positioning measurement reference signal.

With reference to the fourth aspect, in some implementations of the fourth aspect, the first indication information is carried in channel state information.

With reference to the fourth aspect, in some implementations of the fourth aspect, the channel state information further includes but is not limited to: precoding matrix indicator PMI information, channel quality indicator CQI information, and rank indicator RI information of a channel matrix.

According to a fifth aspect, the steps of the inventive multipath single-anchor positioning method performed by the location service node include: receiving third positioning information sent by a to-be-positioned node and fourth positioning information sent by a reference node, where the third positioning information and the fourth positioning information respectively include positioning information obtained by the to-be-positioned node based on a first transmission path and positioning information obtained by the reference node based on the first transmission path; and positioning the to-be-positioned node based on the third positioning information and the fourth positioning information.

The third positioning information includes first time information. Alternatively, the third positioning information includes first time information and first angle information. The first time information includes: an arrival moment $T2$ of a first positioning measurement reference signal and a sending moment $T3$ of a second positioning measurement reference signal; or a difference $T3 - T2$ between the sending moment $T3$ of the second positioning measurement reference signal and the arrival moment $T2$ of the first positioning measurement reference signal. The first positioning measurement reference signal is sent by the reference node, and the second positioning measurement reference signal is sent by the to-be-positioned node. The first angle information includes: an angle of arrival $AOA1$ of the first positioning measurement reference signal; and/or an angle of departure $AOD1$ of the second positioning measurement reference signal.

The fourth positioning information includes second time information. Alternatively, the fourth positioning information includes second time information and second angle information. The second time information includes: an arrival moment $T4$ of the second positioning measurement reference signal and a sending moment $T1$ of the first positioning measurement reference signal; or a difference $T4 - T1$ between the arrival moment $T4$ of the second positioning measurement reference signal and the sending moment $T1$ of the first positioning measurement reference signal. The first positioning measurement reference signal is sent by the reference node, and the second positioning measurement reference signal is sent by the to-be-positioned node. The second angle information includes: an angle of arrival $AOA2$ of the second positioning measurement reference signal; and/or an angle of departure $AOD2$ of the first positioning measurement reference signal.

The obtaining positioning information of the to-be-positioned node based on the third positioning information and the fourth positioning information includes: determining a round trip time based on the first time information and the second time information; calculating the positioning information of the to-be-positioned node based on the round trip time, the $AOA1$ in the first angle information, and the $AOD2$ in the second angle information; calculating the positioning information of the to-be-positioned node based on the round trip time, the $AOD1$ in the first angle information, and the $AOA2$ in the second angle information; calculating the positioning information of the to-be-positioned node based on the round trip time, a weighted value of the $AOA1$ and the $AOD1$ in the first angle information, and the $AOA2$ in the second angle information; calculating the positioning information of the to-be-positioned node based on the round trip time, the weighted value of the $AOA1$ and the $AOD1$ in the first angle information, and the $AOD2$ in the second angle information; calculating the positioning information of the to-be-positioned node based on the round trip time, the weighted value of the $AOA1$ and the $AOD1$ in the first angle information, and a weighted value of the $AOA2$ and the $AOD2$ in the second angle information; calculating the positioning information of the to-be-positioned node based on the round trip time, the $AOA1$ in the first angle information, and the weighted value of the $AOA2$ and the $AOD2$ in the second angle information; or calculating the positioning information of the to-be-positioned node based on the round trip time, the $AOD1$ in the first angle information, and the weighted value of the $AOA2$ and $AOD2$ in the second angle information.

According to a sixth aspect, a communication apparatus is provided, including at least one processor, a communication interface, and a memory. The communication interface is used for information exchange between the communication apparatus and another communication apparatus, the memory stores computer program instructions, and when the computer program instructions are executed by the at least one processor, the communication apparatus is enabled to implement a function of the method according to any one of the implementations of the first aspect, the second aspect, and the fifth aspect on any one of the following nodes: the to-be-positioned node, the reference node, or the location service node.

According to a seventh aspect, a computer program readable storage medium is provided. The computer-readable storage medium has program instructions, and when the program instructions are directly or indirectly executed, a function of the method according to any one of the implementations of the first aspect, the second aspect, and the fifth aspect on any one of the following nodes is implemented: the to-be-positioned node, the reference node, or the location service node.

According to an eighth aspect, a chip system is provided. The chip system includes at least one processor, and when program instructions are executed by the at least one processor, a function of the method according to any one of the implementations of the first aspect, the second aspect, and the fifth aspect on any one of the following apparatuses is implemented: the to-be-positioned node, the reference node, or the location service node.

According to a ninth aspect, a computer program is provided. When the computer program is executed by at least one processor, a function of the method according to any one of the implementations of the first aspect, the second aspect, and the fifth aspect on any one of the following nodes is implemented: the to-be-positioned node, the reference node, or the location service node.

According to a tenth aspect, a computer program product is provided. When the computer program is executed by at least one processor, a function of the method according to any one of the implementations of the first aspect, the second aspect, and the fifth aspect on any one of the following nodes is implemented: the to-be-positioned node, the reference node, or the location service node.

## BRIEF DESCRIPTION OF DRAWINGS

FIG. 1 is a schematic diagram of angle information and distance information in a multipath scenario according to an embodiment of this application;

FIG. 2 is a schematic diagram of an architecture of a multipath single-anchor positioning system according to an embodiment of this application;

FIG. 3 is a schematic flowchart of a multipath single-anchor positioning method according to an embodiment of this application;

FIG. 4 is a schematic flowchart of another multipath single-anchor positioning method according to an embodiment of this application;

FIG. 5 is a schematic flowchart of still another multipath single-anchor positioning method according to an embodiment of this application;

FIG. 6 is a schematic diagram of a structure of channel state information according to an embodiment of this application;

FIG. 7(a), FIG. 7(b), and FIG. 7(c) are schematic diagrams of another structure of channel state information according to an embodiment of this application;

FIG. 8 is a schematic diagram of a structure of a communication node according to an embodiment of this application;

FIG. 9 is a schematic diagram of a structure of another communication node according to an embodiment of this application;

FIG. 10 is a schematic diagram of a structure of still another communication node according to an embodiment of this application; and

FIG. 11 is a schematic diagram of a structure of a communication apparatus according to an embodiment of this application.

## DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two, and "multipath" means two or more paths.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

The technical solutions in embodiments of this application may be applied to various communication systems, for example, a cellular positioning system, a wireless local area network (wireless local area network, WLAN) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (the 5th generation, 5G) mobile communication system, or a new radio (new radio, NR) system.

The to-be-positioned node in embodiments of this application is a communication apparatus having a wireless transceiver function and an NR transmission capability, and may represent a redistribution point (redistribution point) or a communication endpoint (for example, a terminal device). The to-be-positioned node may be, for example, user equipment UE, a terminal device, a terminal, a wireless communication device, a user agent, or a user apparatus. Alternatively, the to-be-positioned node may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G cellular network, or a terminal device in a public land mobile network (public land mobile network, PLMN). From a perspective of a product form, the to-be-positioned node in embodiments of this application may be a device that supports an NR air interface, especially a terminal device such as a mobile phone, a computer, a tablet, a band, a smartwatch, a data card, or a sensor. In embodiments of this application, an example in which the to-be-positioned node is UE is used for description. However, this is not limited in this application.

The reference node in embodiments of this application may be used as a positioning anchor to position the UE. From a perspective of a function, the reference node is a device that has a control function, can configure positioning measurement resources, and supports an NR connection. The reference node has a multi-antenna capability (a quantity of antennas is greater than or equal to 3). From a perspective of a product form, the reference node in this application may be, for example, a next generation node base station (next generation node base station, gNB) in a 5G mobile communication system, and may be a macro base station or a micro base station. Alternatively, the reference node may be a pico base station (pico), a femto base station (femto), a transmission point (transmission point, TP), a relay (relay), or the like. In embodiments of this application, an example in which the reference node is a gNB is used for description. However, this is not limited in this application.

The location service node in embodiments of this application may be a core network apparatus, for example, a location server (location server, LCS), including a location management function (location management function, LMF) entity, and is configured to perform positioning estimation based on data reported by the to-be-positioned node and positioning information reported by the reference node.

With development of intelligence, increasingly more scenarios need to rely on accurate positioning. The 3rd generation partnership project (3rd generation partnership project, 3GPP) standard "TS 22.804 positioning service performance requirement in vertical domain" defines eight types of positioning scenarios. Positioning requirements of these positioning scenarios include absolute positioning and relative positioning requirements. Positioning precision requirements range from 5 m to 20 cm, and reliability requirements range from 90% to 99.9%. In the Rel-17 NR Positioning study item (study item, SI) of the 3GPP RAN#86 meeting, the objectives are as follows: In a general commercial scenario, the positioning precision meets submeter-level positioning precision, and a positioning delay is 100 ms. In the industrial internet of things (industrial internet of things, IIOT), the positioning precision needs to meet a requirement of 20 cm, and the positioning delay needs to meet a requirement of 10 ms. Based on this requirement, the 3GPP standard actively promotes standardization, including a radio access technology dependent positioning (radio access technology (RAT) dependent positioning) based on a 3GPP cellular network, a global navigation satellite system (global navigation satellite system, GNSS), and a positioning technology based on a non-3GPP terrestrial network, for example, wireless fidelity (wireless fidelity, Wi-Fi) positioning, Bluetooth positioning, terrestrial beacon system (terrestrial beacon system, TBS) positioning, ultra wideband (ultra wideband, UWB) positioning, and hybrid positioning technologies.

No matter which positioning technology is used, multipath interference, a clock synchronization error, and rich positioning anchors (three or more anchors) may become key factors that limit positioning precision. A synchronization error in a positioning process includes a synchronization error between a plurality of anchors such as a base station/satellite/access point (access point, AP), and also includes a synchronization error between an anchor (base station/satellite/AP) and to-be-positioned user equipment (user equipment, UE). In an observed time difference of arrival (observed time difference of arrival, OTDOA) technology, the UE measures an observed time difference of arrival of different anchors, which can effectively resolve a problem of a synchronization deviation between the positioning anchor and the to-be-positioned UE. However, the anchors need to be strictly synchronized. Otherwise, the positioning precision is very poor. A multi-round trip time (multi-round trip time, multi-RTT) is used to estimate RTTs between the UE and the plurality of anchors by sending and receiving signals, and estimate a UE location according to a trilateration algorithm. An advantage of using the RTT to estimate a distance between the anchor and the UE for positioning is that there is no need to consider a synchronization error between anchors. However, a disadvantage is that an additional positioning measurement reference signal needs to be used, and consequently, resource overheads are increased.

In addition, because most existing positioning technologies perform location estimation according to a trilateration algorithm or a triangulation location algorithm, three or more related anchors are needed. This may cause an increase in deployment costs and insufficient anchors under a constraint of frequency efficiency. Cellular positioning is used as an example. Multi-anchor positioning has two restrictions. (1) Cell spectrum maximization (cochannel interference control) considered during base station deployment. Therefore, only one or two cells can be seen in a large quantity of areas. (2) Uncertainty of a base station location (an antenna location). Therefore, if single-anchor/single-station positioning can be implemented, it is very beneficial to usability and costs of cellular positioning.

In addition, a multipath effect and signal shielding are main factors that affect measurement precision of a time of arrival (time of arrival, TOA)/a time difference of arrival (time difference of arrival, TDOA). Although a wider bandwidth of a wireless positioning system indicates a higher time resolution of time domain of the wireless positioning system, and a higher resolution obtained after correlation processing is performed on a multipath signal, a positioning error problem caused by a plurality of paths cannot be avoided. Due to multipath impact during signal propagation, a receiver cannot distinguish between line of sight (LOS) and non line of sight (NLOS) signals, and a related peak value deviates during signal processing, causing TOA estimation errors. Alternatively, a receiver receives reflected, refracted, and diffracted radio signals because a direct path is blocked during signal propagation, causing a TOA measurement deviation. Alternatively, because a signal of a direct path is weak, a related processing result is lower than a threshold and is unavailable, and consequently, accurate TOA data cannot be obtained.

To eliminate impact of the multipath effect on positioning, related technologies are as follows. (1) Improve of sensitivity and a dynamic range of a system. Because a radio frequency front-end with a large dynamic range has a higher tolerance to noise interference, a multipath error is reduced. However, in this method, requirements on device hardware is high. (2) Identify of an LOS path and an NLOS path of a channel, and perform weighted processing during location calculation. However, in this method, a receive end needs to be able to accurately identify the LOS/NLOS path. (3) Correct a positioning error caused by the NLOS path. However, in this method, angles at which an obstacle reflects, refracts, and diffracts a signal need to be learned of. An optical principle and plane geometry are used to convert an NLOS propagation path into an equivalent LOS propagation.

To eliminate the impact of the multipath effect on positioning and resolve a problem of insufficient multi-anchor positioning resources, a single-anchor positioning technology is proposed in the industry. To be specific, only one anchor is needed to implement UE positioning, and a plurality of anchors is not needed to participate in positioning at a same time. Therefore, problems of a synchronization error between anchors and insufficient anchor resources are eliminated, and network deployment costs can be reduced. Simultaneously localization and mapping (simultaneously localization and mapping, SLAM) is a single-anchor positioning technology that is widely studied. When an environment location cannot be determined by using a location of a to-be-positioned target, the to-be-positioned target creates a map, and performs autonomous positioning and navigation by using the map. An advantage of the SLAM is that a relative position and a reflector position can be calculated by using a single node, and there is no need to perform coordination between a plurality of nodes in OTDOA positioning, to implement single-anchor positioning. In addition, it is proposed by some researchers that the UE location is estimated by using an angle of arrival (angle of arrival, AOA) and a TOA of the LOS path and a reflection path, to assist single-anchor positioning by using multipath information. In addition, simultaneously position and reflector estimation (simultaneously position and reflector estimation, SPRE) is also a typical single-anchor positioning method. According to an SPRE algorithm, estimation of the UE location and the reflector location may be divided into the following three steps. 1: First, rough location information of the UE is obtained by using a measurement AOA (Angle of arrival, angle of arrival) and a TOA of the LOS path. 2: The reflector positions are estimated based on the estimated rough position, and are refined by using an average filtering method. 3: Current UE location estimation is updated based on the refined reflector locations.

In the single-anchor positioning method assisted by the multipath, a premise for implementing high-precision positioning includes the following. 1: A receive end and a transmit end can identify an LOS path and an NLOS path, and perform TOA measurement or RTT measurement based on the identified LOS path. 2: At least one of the transmit end and the receive end needs to have a multi-antenna capability ($\geq$ 3 antennas), to estimate the AOA or an angle of departure (angle of departure, AOD) and perform hybrid positioning based on the TOA on the LOS path. However, in an actual system, during multipath identification, a conventional multiple signal classification (multiple signal classification, MUSIC) algorithm and an estimation of signal parameters via rotation invariant technique (estimation of signal parameters via rotation invariant technique, ESPRIT) algorithm have a bandwidth problem of the transmit end and the receive end and a noise problem. As a result, non-ideal wide/narrow beams affect AOA/AOD estimation precision. In addition, in a distance metric according to a geometric positioning algorithm, a first-arrival path with a lowest signal transmission delay usually represents a distance from an anchor to a to-be-measured object. However, in an actual scenario, because the LOS path is blocked for some reasons, the NLOS path is estimated to be the LOS path, and consequently, a positioning estimation error is large.

In an ideal multipath environment, without considering impact of factors such as obstacles in a transmission path, the first-arrival path is usually a direct path. The first-arrival path corresponds to the lowest signal transmission delay (a smallest TOA) and a highest signal strength. If the first-arrival path is used to measure angle information of positioning and positioning information, the obtained positioning information is most accurate.

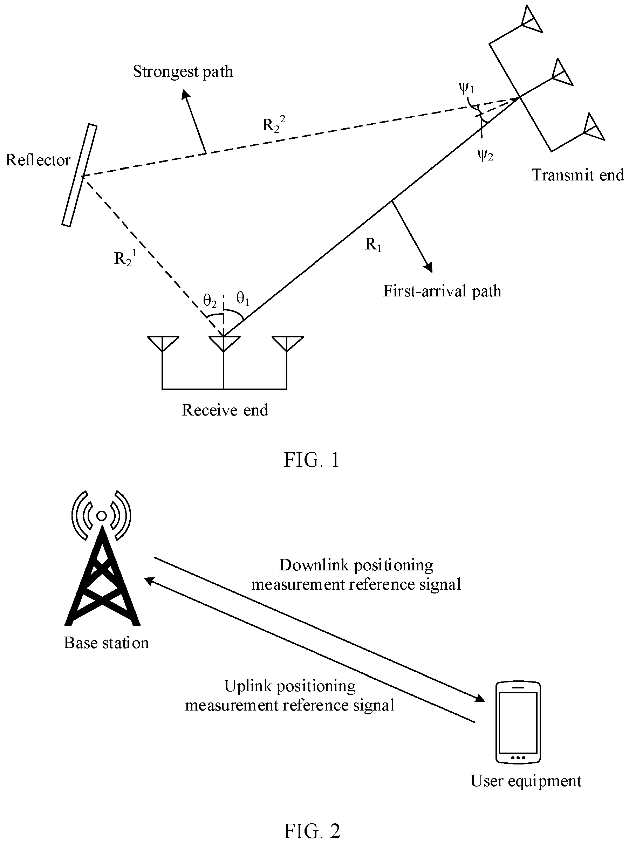

However, in an actual multipath environment, due to impact of an obstacle, a signal of the first-arrival path is greatly attenuated during transmission, so that a signal strength of the first-arrival path is not necessarily highest. In this case, the first-arrival path and a signal strongest path (which is referred to as the strongest path below) are two different paths. For example, FIG. 1 is a schematic diagram of angle information and distance information respectively corresponding to a first-arrival path and a strongest path. $\theta_1$ is an AOD of the first-arrival path, $\varphi_1$ is an AOA of the first-arrival path, and $R_1$ is distance information corresponding to a TOA. $\theta_2$ is an AOD of the strongest path with smallest signal attenuation, $\varphi_2$ is an AOA of the strongest path, $R_2^1$ corresponds to a distance between a transmit end and a reflector in the strongest path, and $R_2^2$ corresponds to a distance between the reflector and a receive end in the strongest path.

It should be understood that a higher signal strength indicates a smaller corresponding angle estimation error, and therefore more accurate angle information can be obtained based on the strongest path. A smaller TOA indicates a closer direct path, and therefore more accurate distance information can be obtained based on the first-arrival path. As described in the background, in a multipath positioning environment, if consistency of distance measurement information and angle information between an anchor and UE cannot be ensured, precision of single-anchor positioning cannot be ensured. Therefore, in single-anchor positioning in a multipath scenario, to obtain more accurate positioning information, consistency of distance information measurement and angle information measurement during positioning measurement needs to be maintained, that is, distance measurement and angle measurement are performed based on a same path. Therefore, selection need to be performed between the first-arrival path and the strongest path, and a tradeoff is made between accurate distance information measurement and accurate angle information measurement to implement accurate positioning.

To meet the foregoing requirement, embodiments of this application provide a multipath single-anchor positioning method. A to-be-positioned node indicates, to a reference node, which path corresponds to positioning information measured by the to-be-positioned node, so that the reference node and the to-be-positioned node also measure positioning information based on a same path. This ensures consistency between distance information and angle information and implements high-precision positioning.

For example, FIG. 2 is a schematic diagram of an architecture of a multipath single-anchor positioning system according to an embodiment of this application.

In some embodiments, a reference node may be a positioning anchor in a positioning process, and can send, to a target node, a downlink positioning measurement reference signal, for example, a positioning reference signal (positioning reference signal, PRS), a channel state information reference signal (channel state information reference signal, CSI-RS), or a time/frequency tracking reference signal (time/frequency tracking reference signal, TRS).

In some embodiments, a to-be-positioned node may send an uplink positioning measurement reference signal, for example, a sounding reference signal (sounding reference signal, SRS). The to-be-positioned node may further support an NR transmission capability.

In some embodiments, the system architecture may further include a location service node. The location service node may initiate a single-anchor positioning procedure based on a request of the to-be-positioned node, and position the to-be-positioned node based on positioning information reported by the to-be-positioned node and the reference node. In this embodiment of this application, the location service node may be an LMF entity in a location server.

For ease of understanding, in the system architecture shown in FIG. 2, the to-be-positioned node is user equipment, and the reference node is a base station. In addition, the multipath single-anchor positioning method provided in embodiments of this application may be applied to a plurality of terminal device positioning scenarios. For example, in an outdoor scenario, a user positions a location of the user. This is not limited in this application.

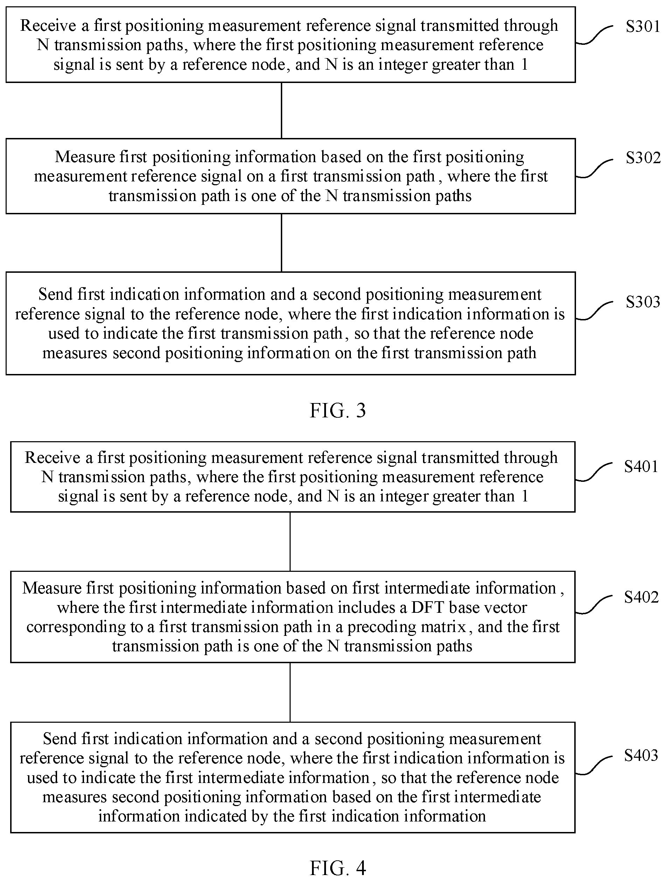

For example, FIG. 3 is a schematic flowchart of a multipath single-anchor positioning method according to an embodiment of this application. The method may be applied to the system architecture shown in FIG. 2, and may include the following steps. The steps may be performed by a to-be-positioned node.

S301: Receive a first positioning measurement reference signal transmitted through N transmission paths, where the first positioning measurement reference signal is sent by a reference node, and N is an integer greater than 1.

In some embodiments, the reference node sends a positioning measurement reference signal. The positioning measurement reference signal may include but is not limited to one or more of a PRS, a CSI-RS, and a TRS.

It should be understood that multipath propagation of a signal is caused due to scattering of an electromagnetic wave by an atmosphere, reflection and refraction of an electromagnetic wave by an ionosphere, and reflection of an electromagnetic wave by a surface object like a mountain or a building in an actual environment. The N transmission paths herein are a plurality of transmission paths in a multipath propagation environment. The positioning measurement reference signal sent by the reference node may be separately transmitted to the to-be-positioned node by using the N transmission paths.

In some embodiments, the N output paths include a first-arrival path and a strongest path. The first-arrival path is a transmission path on which the positioning measurement reference signal has a lowest delay. The strongest path is a path on which the positioning measurement reference signal has smallest attenuation. In other words, the strongest path is a path on which the positioning measurement reference signal has a highest signal power.

In some embodiments, when sending the first positioning measurement reference signal, the reference node records a sending moment T1 of the first positioning measurement reference signal. Optionally, the sending moment T1 corresponds to a moment at which the first positioning measurement reference signal is sent by a transmit antenna of the reference node.

In some embodiments, the reference node may further send time-frequency domain indication information to the to-be-positioned node, to indicate the to-be-positioned node to receive the first positioning measurement reference signal in specified time-frequency domain.

In some embodiments, the to-be-positioned node receives, in the specified time-frequency domain, the first positioning measurement reference signal sent by the reference node. In addition, the to-be-positioned node records an arrival moment T2 of the first positioning measurement reference signal. Optionally, the arrival moment T2 corresponds to a moment at which the first positioning measurement reference signal arrives at a receive antenna of the to-be-positioned node.

For example, the to-be-positioned node may record an arrival moment of the first positioning measurement reference signal on each transmission path. Alternatively, the to-be-positioned node may record at least arrival moments of the first positioning measurement reference signal on the first-arrival path and the strongest path.

S302: Measure first positioning information based on the first positioning measurement reference signal on a first transmission path, where the first transmission path is one of the N transmission paths.

The first transmission path is any one of the N transmission paths. Optionally, the first transmission path is the first-arrival path. Alternatively, the first transmission path is the strongest path. Alternatively, the first transmission path may be both the first-arrival path and the strongest path.

In some embodiments, the first positioning information includes but is not limited to: the arrival moment T2 of the first positioning measurement reference signal, an angle of arrival AOA1 of the first positioning measurement reference signal, and a reference signal receiving power (reference signal receiving power, RSRP) of the first positioning measurement reference signal.

S303: Send first indication information and a second positioning measurement reference signal to the reference node, where the first indication information is used to indicate the first transmission path, so that the reference node measures second positioning information on the first transmission path.

In some embodiments, the second positioning measurement reference signal is an uplink measurement reference signal, and may include but is not limited to an SRS.

In some embodiments, the first indication information may be, for example, channel multipath indicator (channel multipath indicator, CMPI) information. The first indication information may be carried in a channel state information report (CSI report).

For example, when the to-be-positioned node has a strong antenna capability (for example, a quantity of antennas is greater than or equal to 3) and a strong processing capability (for example, a calculation capability), so that the to-be-positioned node has a multipath identification capability, the first indication information may be indication information of the first transmission path, which is used to indicate a transmission path corresponding to the measured first positioning information.

It should be understood that the first indication information is sent to the reference node, so that the reference node can measure positioning information based on a same transmission path. This ensures that positioning information measured by the reference node and the to-be-positioned node is positioning information on a same transmission path, improves accuracy of the positioning information, and improves positioning precision.

In some embodiments, the to-be-positioned node may further obtain an angle of departure AOD1 of the second positioning measurement reference signal.

In some embodiments, the to-be-positioned node may report third positioning information to a location service node. The third positioning information is used by the location service node to position the to-be-positioned node. For example, the third positioning information includes first time information. Alternatively, the third positioning information includes first time information and first angle information. The first time information includes the arrival moment T2 of the first positioning measurement reference signal and a sending moment T3 of the second positioning measurement reference signal. Alternatively, the first time information includes a difference T3 - T2 between the sending moment T3 of the second positioning measurement reference signal and the arrival moment T2 of the first positioning measurement reference signal. The first angle information may include the angle of arrival AOA1 of the first positioning measurement reference signal, and/or the angle of departure AOD1 of the second positioning measurement reference signal.

In some embodiments, the reference node receives the first indication information and a second positioning measurement reference signal that are sent by the to-be-positioned node. The first indication information and the second positioning measurement reference signal may be sent simultaneously, or may not be sent simultaneously. When the first indication information and the second positioning measurement reference signal are not sent simultaneously, a time sequence of sending the first indication information and the second positioning measurement reference signal is not limited in this application. For example, the reference node may receive a CSI report sent by the to-be-positioned node, and learn, based on the CMPI indication information included in the CSI report, the transmission path corresponding to the first positioning information measured by the to-be-positioned node.

In some embodiments, the reference node measures, based on the indication information of the first transmission path, the second positioning information corresponding to the first transmission path.

The second positioning information includes an arrival moment T3 of the second positioning measurement reference signal and an angle of arrival AOA2 of the second positioning measurement reference signal.

In some embodiments, the reference node receives, in the specified time-frequency domain, the second positioning measurement reference signal sent by the to-be-positioned node. In addition, the reference node records the arrival moment T4 of the second positioning measurement reference signal. Optionally, the arrival moment T4 corresponds to a moment at which the second positioning measurement reference signal arrives at a receive antenna of the reference node.

For example, the reference node may record an arrival moment of the second positioning measurement reference signal on each transmission path. Alternatively, the reference node may record at least arrival moments of the second positioning measurement reference signal on the first-arrival path and the strongest path.

In some embodiments, the reference node reports fourth positioning information to the location service node. The fourth positioning information is used by the location service node to position the to-be-positioned node. For example, the fourth positioning information includes second time information. Alternatively, the fourth positioning information includes second time information and second angle information. The second time information includes the arrival moment T4 of the second positioning measurement reference signal and the sending moment T1 of the first positioning measurement reference signal. Alternatively, the second time information includes a difference T4 - T1 between the sending moment T4 of the second positioning measurement reference signal and the sending moment T1 of the first positioning measurement reference signal. The first angle information includes the angle of departure AOA2 of the first positioning measurement reference signal, and/or an angle of arrival AOD2 of the second positioning measurement reference signal.

According to the multipath single-anchor positioning method provided in this embodiment of this application, indication information of a transmission path corresponding to positioning information measured by a to-be-positioned node is sent to a reference node, so that the reference node can measure positioning information based on a same transmission path. This ensures that the positioning information measured by the reference node and the to-be-positioned node is positioning information on a same transmission path, and improves accuracy of the positioning information and positioning precision.

For example, FIG. 4 is a schematic flowchart of another multipath single-anchor positioning according to an embodiment of this application. The method may be applied to the system architecture shown in FIG. 2, and may include the following steps. The steps may be performed by a to-be-positioned node.

S401: Receive a first positioning measurement reference signal transmitted through N transmission paths, where the first positioning measurement reference signal is sent by a reference node, and N is an integer greater than 1.

S402: Measure first positioning information based on first intermediate information, where the first intermediate information includes a discrete Fourier transformation DFT base vector corresponding to a first transmission path in a precoding submatrix, and the first transmission path is one of the N transmission paths.

S403: Send first indication information and a second positioning measurement reference signal to the reference node, where the first indication information is used to indicate the first intermediate information, so that the reference node measures second positioning information based on the first intermediate information indicated by the first indication information.

It should be understood that, different from the multipath single-anchor positioning method shown in FIG. 3, the method shown in FIG. 4 is applicable to a scenario in which the to-be-positioned node cannot identify a plurality of paths. For example, when the to-be-positioned node has a weak antenna capability (for example, a quantity of antennas is less than 3) or a weak processing capability (for example, a calculation capability), the to-be-positioned node cannot directly perform multipath identification on a signal according to a super-resolution algorithm or a multi-signal classification algorithm. To avoid repetition, the following describes only a difference between the embodiment in FIG. 4 and the embodiment in FIG. 3.

It can be learned from the foregoing analysis that, when the to-be-positioned node cannot identify a plurality of paths, the to-be-positioned node cannot directly indicate the reference node to select which transmission path for measuring positioning information. In this case, the to-be-positioned node cannot directly measure the positioning information based on a transmission path. Therefore, in this case, the to-be-positioned node may measure the first positioning information based on measurement information corresponding to a discrete Fourier transform (discrete Fourier transform, DFT) base vector, and indicate the reference node to measure the second positioning information based on same measurement information, so that measurement of the first positioning information and the second positioning information is completed by using the DFT base vector in a same precoding submatrix. This ensures positioning precision in a multipath environment.

The DFT base vector in this example of this application may also be referred to as a DFT beam.

In some embodiments, in the step S402, the first intermediate information may include the DFT base vector corresponding to the first transmission path in the precoding submatrix. The precoding submatrix is a precoding submatrix including a DFT base vector projected onto the first transmission path. It should be understood that the precoding matrix in this embodiment of this application may be a matrix including a frequency domain DFT vector or a spatial domain and frequency domain DFT vector selected by the to-be-positioned node from a basic frequency domain vector set or a basic spatial domain and frequency domain vector set.

It should be further understood that the DFT base vector corresponding to the first transmission path in the precoding submatrix in this embodiment of this application may be a projection vector that is associated with the first transmission path and that can project the first positioning measurement reference signal on the first transmission path to delay domain, or to delay domain and angle domain. In other words, the first positioning measurement signal on the first transmission path may be projected to the delay domain by using a frequency domain DFT base vector. Alternatively, the first positioning measurement signal on the first transmission path may be separately projected to the delay domain and the angle domain by using a frequency domain two-dimensional DFT base vector and a spatial domain two-dimensional DFT base vector.

In some embodiments, in the step S403, the first indication information may be used to indicate the first intermediate information. For example, the first indication information may be used to indicate the DFT base vector corresponding to the first transmission path.

For example, the first indication information may include identification information of the DFT base vector. Alternatively, the first indication information may include index information of the DFT base vector, for example, index information of a frequency domain discrete Fourier transform DFT base vector, or index information of a spatial domain and frequency domain two-dimensional discrete Fourier transform DFT base vector.

According to the multipath single-anchor positioning method provided in this embodiment of this application, first indication information is sent to a reference node, so that the reference node can measure positioning information based on a DFT base vector in a same precoding submatrix. This ensures that positioning information measured by the reference node and a to-be-positioned node is positioning information corresponding to a transmission path under projection of a same DFT base vector, improves accuracy of the positioning information, and improves positioning precision.

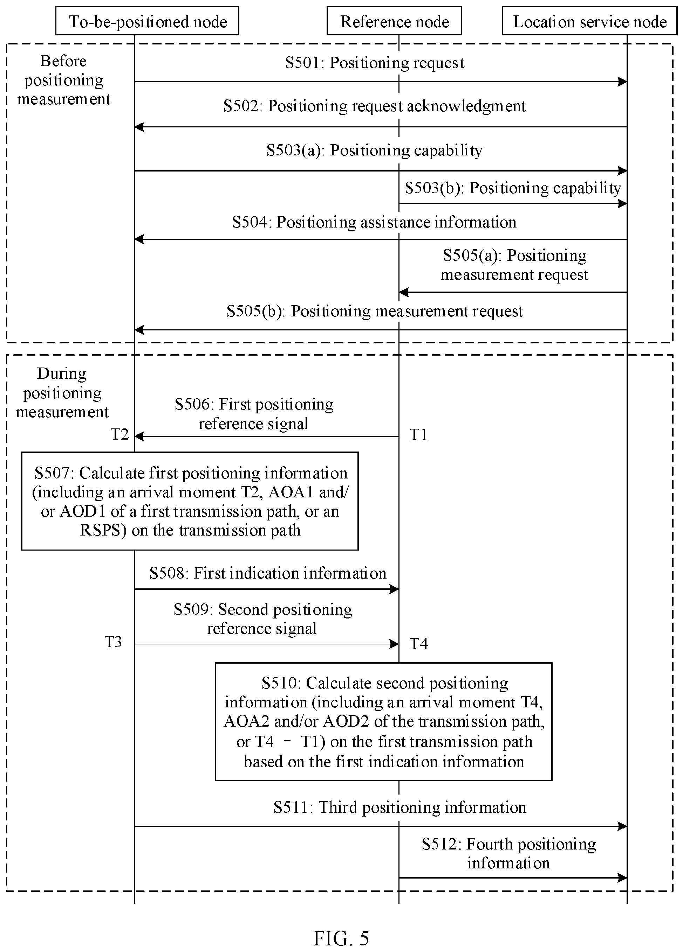

For example, FIG. 5 is a schematic flowchart of interaction between a to-be-positioned node, a reference node, and a location service node in a multipath single-anchor positioning process according to an embodiment of this application.

For ease of understanding, the multipath single-anchor positioning process provided in this embodiment of this application is specifically divided into two phases. A phase 1 is an information configuration phase before positioning measurement, and a phase 2 is a positioning information measurement and reporting phase.

For example, the phase 1 includes the following steps.

S501: The to-be-positioned node sends a positioning request to the location service node.

The to-be-positioned node may send a positioning request message to the location service node, to request positioning from the location service node.

S502: The location service node sends a positioning request acknowledgment information to the to-be-positioned node.

After receiving the positioning request, the location serving node (for example, a location management function LMF in a location server LCS) starts to initiate a single-anchor or single-base station cellular positioning procedure.

In some embodiments, after determining single-anchor positioning, the location service node may request to query a positioning capability of the to-be-positioned node. Specifically, the location service node may send positioning capability request information to the to-be-positioned node, and the positioning capability request information may be included in the positioning request acknowledgment message.

In some embodiments, the location service node may further request to query a positioning capability of the reference node. Specifically, the location service node may send the positioning capability request information to the to-be-positioned node.

The positioning capability herein may include an antenna capability, for example, a quantity of antennas. It should be understood that when the antenna capability of the reference node is strong, for example, when the quantity of antennas is greater than or equal to 3, more accurate angle information may be obtained based on a received positioning measurement reference signal. Similarly, if the antenna capability of the to-be-positioned node is strong, more accurate angle information may be obtained, to improve accuracy of the positioning information.

S503(a): The to-be-positioned node sends the positioning capability to the location service node.

For example, the to-be-positioned node feeds back the positioning capability of the to-be-positioned node to the location service node in response to the positioning capability request of the location service node.

S503(b): The reference node sends the positioning capability to the location service node.

For example, the reference node feeds back the positioning capability of the reference node to the location service node in response to the positioning capability request of the location service node.

In some embodiments, the location service node may select a proper single-anchor positioning method based on the positioning capabilities respectively reported by the to-be-positioned node and the reference node. For example, when both the to-be-positioned node and the reference node have strong antenna capabilities (a quantity of antennas is greater than or equal to 3), it is determined that an RTT + AOD hybrid positioning method, an RTT + AOA hybrid positioning method, a TOA + AOD hybrid positioning method, a TOA + AOA hybrid positioning method, or the like is used. When the reference node has a strong positioning capability, but the to-be-positioned node has a weak positioning capability, a hybrid positioning method of an RTT + an AOA/AOD calculated by the reference node, or a hybrid positioning method of a TOA + an AOA/AOD calculated by the reference node, or the like may be used.

S504: The location service node sends positioning assistance information to the to-be-positioned node.

The location service node may send positioning assistance data to the to-be-positioned node by using an LTE positioning protocol (LTE positioning protocol, LPP).

For example, the positioning assistance information sent by the location service node to the to-be-positioned node may include configuration information of a downlink positioning measurement reference signal and configuration information of an uplink positioning measurement reference signal. The downlink positioning measurement reference signal includes a PRS, a CSI-RS, a TRS, and the like. The uplink positioning measurement reference signal includes an SRS.

S505(a): The location service node sends a positioning measurement request to the reference node.

S505(b): The location service node sends a positioning measurement request to the to-be-positioned node.

It should be understood that a sequence of the positioning measurement requests sent by the location service node to the reference node and the to-be-positioned node may not be limited to the sequence shown in FIG. 5. For example, the location service node may first send the positioning measurement request to the to-be-positioned node, and then send the positioning measurement request to the reference node. Alternatively, the location server may send the positioning measurement requests to both the to-be-positioned node and the reference node. This is not limited in this application.

After receiving a positioning measurement signal of the location service node, the to-be-positioned node and the reference node may measure and report positioning information (that is, the phase 2 in FIG. 5), which specifically includes the following steps.

S506: The reference node sends a first positioning measurement reference signal to the to-be-positioned node.

The first positioning measurement reference signal includes but is not limited to a PRS, a CSI-RS, and a TRS.

In some embodiments, before sending the first positioning measurement reference signal to the to-be-positioned node, the reference node may first send indication information of a time-frequency resource to the to-be-positioned node, so that the to-be-positioned node receives the first positioning measurement reference signal on a specified time-frequency resource.

In some embodiments, when sending the first positioning measurement reference signal, the reference node records a sending moment T1 of the first positioning measurement reference signal. Optionally, the sending moment T1 corresponds to a moment at which the first positioning measurement reference signal is sent by a transmit antenna of the reference node.

It should be understood that the first positioning measurement reference signal may be transmitted to the to-be-positioned node through N transmission paths, and N is an integer greater than 1. The N transmission paths may include a first-arrival path and a strongest path. The first-arrival path is a path with a lowest signal delay, and the strongest path is a path with smallest signal attenuation, that is, a path with a highest signal strength.

In some embodiments, the first-arrival path and the strongest path are a same transmission path. In some other embodiments, due to impact of an obstacle or the like, the first-arrival path and the strongest path are two different transmission paths.

S507: The to-be-positioned node calculates first positioning information on a first transmission path.

The first transmission path is one of the N transmission paths, for example, the first-arrival path and/or the strongest path.

In some embodiments, the to-be-positioned node receives the first positioning measurement reference signal on the specified time-frequency domain resource based on the indication information that is of the time-frequency domain resource and that is sent by the reference node.

In some embodiments, the to-be-positioned node may calculate a received power of the first positioning measurement reference signal, to obtain strengths of the first positioning measurement reference signal on different transmission paths.

In some embodiments, the to-be-positioned node may select the first transmission path according to a specific criterion to calculate the positioning information. To ensure accuracy of positioning information, the first transmission path in this embodiment of this application may be the first-arrival path or the strongest path, or may be both the first-arrival path and the strongest path. For example, when the to-be-positioned node has a strong antenna capability and a strong calculation capability, and can identify a plurality of paths, the to-be-positioned node may determine, based on an arrival moment of the first positioning measurement reference signal on each transmission path, that a transmission path corresponding to the first positioning measurement reference signal that first arrives is the first-arrival path. The to-be-positioned node may also determine, based on the strength of the received first positioning measurement reference signal, that a transmission path with a highest signal power is the strongest path. Then, the to-be-positioned node selects the first-arrival path or the strongest path according to a specific determining criterion to calculate the positioning information.

For example, the determining criterion for the to-be-positioned node to select the first-arrival path and the strongest path is as follows: The to-be-positioned node determines a delay error and a signal strength error between the first-arrival path and the strongest path, and selects, based on the delay error and the signal strength error, a path that has little impact on positioning precision to calculate the positioning information. For example, because the distance measurement information of the first-arrival path is more accurate, an arrival moment of the positioning measurement reference signal on the first-arrival path may be used as a reference to determine a deviation of an arrival moment of the strongest path, thereby reflecting a deviation of the distance measurement information. The angle information of the strongest path is more accurate, and therefore, a power of the positioning measurement reference signal on the strongest path may be used as a reference to determine an error of the signal strength on the first-arrival path, thereby reflecting an error of the angle information. According to the foregoing criterion, when the to-be-positioned node determines that the angle error is greater than the distance measurement error, if the first-arrival path is selected to calculate the positioning information, the angle error is excessively large, and a positioning information error is large. Therefore, the strongest path may be selected to calculate the positioning information. When the to-be-positioned node determines that the distance measurement information error is greater than the angle error, if the strongest path is selected to calculate the positioning information, the deviation of the distance measurement information is excessively large. In this case, the first-arrival path may be selected to calculate the positioning information.

In some embodiments, the to-be-positioned node may record an arrival moment T2 of the first positioning measurement reference signal on the first transmission path. Optionally, the arrival moment T2 may be a moment at which the first positioning measurement reference signal arrives at a receive antenna of the to-be-positioned node.

In some embodiments, the to-be-positioned node may calculate an angle of arrival AOA1 of the first transmission path according to a super-resolution algorithm or a multi-signal classification algorithm.

S508: The to-be-positioned node sends the first indication information to the reference node.

The first indication information is used to indicate information about the first transmission path. Alternatively, the first indication information is used to indicate first intermediate information used when the first positioning information is obtained. The first intermediate information may include a DFT base vector corresponding to the first transmission path in a precoding submatrix.

It should be understood that the first intermediate information herein may further include other information used to measure the first positioning information, and the first intermediate information has an association relationship with the first transmission path, so that positioning information measured by different nodes based on the first intermediate information can correspond to a same transmission path.

In some embodiments, the first indication information may be channel multipath indicator CMPI information. The first indication information may be carried in a CSI report and reported to the reference node.

S509: The to-be-positioned node sends a second positioning measurement reference signal to the reference node.

The second positioning measurement reference signal includes but is not limited to an SRS and the like.

In some embodiments, before sending the second positioning measurement reference signal to the reference node, the to-be-positioned node may first send the indication information of the time-frequency resource to the reference node, so that the reference node receives the second positioning measurement reference signal on the specified time-frequency resource.

In some embodiments, when sending the second positioning measurement reference signal, the to-be-positioned node records a sending moment T3 of the second positioning measurement reference signal. Optionally, the sending moment T3 corresponds to a moment at which the second positioning measurement reference signal is sent by a transmit antenna of the to-be-positioned node.

It should be understood that a sequence of sending, by the to-be-positioned node, the first indication information and the second positioning measurement reference signal to the reference node shown in FIG. 5 is merely an example. In other words, the steps S508 and S509 shown in the figure are not unique implementations. In actual application, a plurality of implementations may be further included. For example, the to-be-positioned node first sends the second positioning measurement reference signal to the reference node on the specified time-frequency resource, and then sends the first indication information. Alternatively, the to-be-positioned node simultaneously sends the first indication information and the second positioning measurement reference signal to the reference node. This is not limited in this application.

S510: The reference node calculates second positioning information on the first transmission path based on the first indication information.

The second positioning information includes but is not limited to an arrival moment T4 of the second positioning measurement reference signal, an AOA2 of the first transmission path, and the like.

In some embodiments, when obtaining, based on the first indication information, a transmission path corresponding to the first positioning information calculated by the to-be-positioned node, that is, the first transmission path, the reference node calculates the arrival moment T4 of the second positioning measurement reference signal on the first transmission path, the AOA2 corresponding to the first transmission path, and the like. Alternatively, when obtaining, based on the first indication information, the DFT base vector in the precoding submatrix that is used by the to-be-positioned node to calculate the first positioning information, the reference node calculates the second positioning information based on the DFT base vector in a same precoding submatrix, and also obtains the positioning information corresponding to the first transmission path.

S511: The to-be-positioned node sends third positioning information to the location service node.

The third positioning information includes positioning information calculated by the to-be-positioned node based on the first transmission path, and includes but is not limited to: T2 and T3; T3 - T2; T2, T3, and AOA1/AOD1; T3 - T2, and AOA1/AOD1; or the like.

In some embodiments, the to-be-positioned node may report the third positioning information to the location service node by using an LPP message. Optionally, the message may further include a CSI-RSPS.

It should be understood that the step S511 may alternatively be performed after the step S507. For example, after obtaining the first positioning information based on the first transmission path, the to-be-positioned node may obtain the third positioning information based on the first positioning information, and report the third positioning information to the location service node. A sending time of the third positioning information is not limited in this application.

S512: The reference node sends fourth positioning information to the location service node.

The fourth positioning information includes positioning information calculated by the reference node based on the first transmission path, and includes but is not limited to: T1 and T4; T4 - T1; T1, T4, AOA2 and/or AOD2; T4 - T 1, AOA2 and/or AOD2; or the like.

In some embodiments, the reference node may report the fourth positioning information to the location service node by using an NRPPa message. Optionally, the message may further include an SRS-RSPS.

In some embodiments, after receiving the third positioning information and the fourth positioning information, the location service node may determine the positioning information of the to-be-positioned node based on the measurement values T3 - T2 (or T2, T3), AOA1, and/or AOD1 that are/is reported by the to-be-positioned node, and the measurement values T4 - T1 (or T1, T4), AOA2, and/or AOD2 that are/is reported by the reference node. Alternatively, the location service node may complete AOD2 and AOA2 measurement based on the reported RSRP of the downlink positioning measurement reference signal and the reported RSRP of the uplink positioning measurement reference signal, and complete single-anchor hybrid positioning.

Specifically, the location service node may calculate time information based on an RTT method in the 3GPP R16 standard, that is, RTT = -(R3 - R2) + (T4 - T1). Angle information may be determined based on the measured angle information AOA2/AOD2 sent by the reference node, or may be determined based on the measured angle information AOA1/AOD1 sent by the to-be-positioned node.

Optionally, when antenna capabilities of both the reference node and the to-be-positioned node are strong enough, both the reference node and the to-be-positioned node can perform accurate angle measurement. In this case, to further improve positioning precision, a weighted value (for example, an average value) of the AOA1 and the AOD1, or a weighted value (for example, an average value) of the AOD2 and the AOA2 may be used as optimized angle information, to complete hybrid positioning.

In some possible implementations, the location service node determines a round trip time RTT based on first time information and second time information. Then, the location service node calculates the positioning information of the to-be-positioned node based on the round trip time, the AOA1 in the first angle information, and the AOD2 in the second angle information. Alternatively, the location service node calculates the positioning information of the to-be-positioned node based on the round trip time, the AOA1 in the first angle information, and the AOA2 in the second angle information. Alternatively, the location service node calculates the positioning information of the to-be-positioned node based on the round trip time, a weighted value of the AOA1 and the AOD1 in the first angle information, and the AOA2 in the second angle information. Alternatively, the location service node calculates the positioning information of the to-be-positioned node based on the round trip time, the weighted value of the AOA1 and the AOD1 in the first angle information, and the AOD2 in the second angle information. Alternatively, the location service node calculates the positioning information of the to-be-positioned node based on the round trip time, the weighted value of the AOA1 and the AOD1 in the first angle information, and a weighted value of the AOA2 and the AOD2 in the second angle information. Alternatively, the location service node calculates the positioning information of the to-be-positioned node based on the round trip time, the AOA1 in the first angle information, and the weighted value of the AOA2 and the AOD2 in the second angle information. Alternatively, the location service node calculates the positioning information of the to-be-positioned node based on the round trip time, the AOD1 in the first angle information, and the weighted value of the AOA2 and the AOD2 in the second angle information.

For a specific hybrid positioning process in which the location service node determines the location information of the to-be-positioned node based on the reported measurement information, refer to an existing procedure. Details are not described herein again.

According to the multipath single-anchor positioning method provided in this embodiment of this application, indication information of a transmission path corresponding to positioning information measured by a to-be-positioned node or indication information of a DFT base vector in a precoding submatrix used for measuring the positioning information is sent to a reference node, so that the reference node can measure positioning information based on a same transmission path or based on a same DFT base vector. This ensures that the positioning information measured by the reference node and the to-be-positioned node is positioning information on a same transmission path, or positioning information on a transmission path under projection of a same DFT base vector, and improves accuracy of the positioning information and positioning precision.

It should be understood that, in addition to sending first indication information to the reference node, the to-be-positioned node further needs to send the following information to the reference node: (1) a precoding matrix indicator (precoding matrix indicator, PMI), where the to-be-positioned node estimates a channel matrix based on a real-time channel change status, and selects, from a codebook according to a specific criterion, a precoding matrix that best matches a downlink channel, to determine the precoding matrix indicator PMI; (2) a channel quality indicator (channel quality indicator, CQI), where the to-be-positioned node may further determine, based on the determined PMI, channel quality obtained after the PMI is used, that is, the channel quality indicator CQI, and the CQI is also fed, as CSI, back to a network device, for example, the location service node; and (3) a rank indicator (rank indicator, RI) of a channel matrix, where the RI is a quantity of layers of data that can be carried by a physical channel.

For ease of understanding, with reference to the accompanying drawings, the following describes specific content of the first indication information and a structure of the CSI in two scenarios in which the to-be-positioned node can identify a plurality of paths (a case 1 for short below) and cannot identify the plurality of paths (a case 2 for short below).

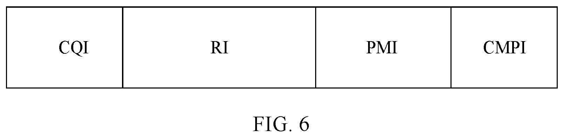

For example, FIG. 6 is a schematic diagram of a structure of channel state information according to an embodiment of this application.

For the case 1, it should be understood that when the to-be-positioned node has a strong antenna capability (for example, a quantity of antennas is greater than or equal to 3) or a strong processing capability (for example, a calculation capability), the to-be-positioned node has a strong multipath identification capability, can identify each of the N transmission paths, and can calculate positioning information like a time of arrival and an angle of each transmission path. In this case, the to-be-positioned node may identify the first transmission path (for example, the first-arrival path and the strongest path), and calculate the positioning information based on the first transmission path. Then, the to-be-positioned node may send the indication information of the first transmission path to the reference node, so that the reference node also calculates the positioning information based on the first transmission path.

Specifically, the indication information of the first transmission path may be channel multipath indicator CMPI information, and is carried in channel state indicator CSI information (as shown in FIG. 6). For example, the CSI shown in FIG. 6 includes a CQI, an RI, a PMI, and a CMPI. The CQI, the RI, and the PMI may be existing content in an existing standard, for example, the same as content in NR standard release 15 (Rel-15) and NR standard release 16 (Rel-16), and details are not described herein again. The CMPI is a field newly added to the CSI, and aims to indicate information about the first transmission path, so that the reference node learns a transmission path corresponding to the positioning information calculated by the to-be-positioned node, and calculates the positioning information by using a same transmission path, for example, TOA2 measurement and AOA2 measurement.

In some embodiments, the CMPI may be represented by 1-bit information. For example, when the first transmission path is the first-arrival path, the CMPI is represented by "0", which indicates that the to-be-positioned node measures the positioning information by using the first-arrival path. When the first transmission path is the strongest path, the CMPI is represented by "1", which indicates that the to-be-positioned node measures the positioning information by using the strongest path. Alternatively, when the first transmission path is the first-arrival path, the CMPI is represented by "1", which indicates that the to-be-positioned node measures the positioning information by using the first-arrival path. When the first transmission path is the strongest path, the CMPI is represented by "0", which indicates that the to-be-positioned node measures the positioning information by using the strongest path.

In some embodiments, after receiving the CSI report, the reference node may parse the CMPI to learn of a transmission path indicated by the CMPI, and then complete positioning information measurement, for example, T4 and AOA2/AOD2, T4 - T1 and AOA2/AOD2, or the like, based on the path indicated by the CMPI.

According to the foregoing multipath single-anchor positioning method, the to-be-positioned node indicates, to the reference node, a transmission path selected when the to-be-positioned node measures the positioning information, so that the reference node can measure the positioning information based on a same transmission path. This can ensure that both the to-be-positioned node and the reference node complete positioning information measurement based on the same transmission path, and an RTT, angle information, and the like correspond to the same transmission path, to reduce multipath interference and obtain more accurate positioning precision.

For the case 2, it should be understood that when the to-be-positioned node has a weak antenna capability of (for example, a quantity of antennas is less than 3) or a weak processing capability (for example, a calculation capability), the to-be-positioned node is unable to identify each of the N transmission paths. In this case, the to-be-positioned node may indicate, to the reference node, a DFT base vector in the precoding submatrix used for measuring the positioning information. The reference node completes positioning information measurement by using a same DFT base vector in a same precoding submatrix and based on the received PMI and DFT base vector indication information. This ensures that the positioning information measured by the to-be-positioned node and the reference node corresponds to a same transmission path, avoids impact caused by a plurality of paths, and improves measurement precision of the positioning information.

To better understand the multipath single-anchor positioning method provided in this embodiment of this application, the to-be-positioned node and the reference node measure the positioning information based on the same DFT base vector. This can reduce a probability of multipath interference, to improve positioning precision. The following describes a related process.

In some embodiments, after receiving the first positioning measurement reference signal on the N transmission paths, the to-be-positioned node may project the first positioning measurement reference signal to delay domain, or delay domain and angle domain by using the DFT base vector. For example, the to-be-positioned node performs frequency domain DFT base vector projection on the first positioning measurement reference signals on the N transmission paths, to project the first positioning measurement reference signals to the delay domain, or performs frequency domain DFT base vector projection and spatial domain DFT base vector projection on the first positioning measurement reference signals, to project the first positioning measurement reference signals to the delay domain and the angle domain. Then, the to-be-positioned node may determine the first-arrival path based on the delay domain, or determine the first-arrival path and the strongest path based on the angle domain and the delay domain, and then select the first-arrival path or the strongest path to measure the positioning information.

It should be understood that, after DFT base vector projection is performed on the first positioning measurement reference signal, there is an association relationship between the transmission path and the DFT base vector in the precoding submatrix. For example, after the frequency domain DFT base vector projection is performed on the first positioning measurement reference signal, different transmission paths exhibit different delay characteristics on different frequency domain DFT base vectors. Alternatively, after the spatial domain DFT base vector projection and the frequency domain DFT base vector projection are separately performed on the first positioning measurement reference signal, different transmission paths exhibit different delay characteristics and angle characteristics on different frequency domain DFT base vectors and different spatial domain DFT base vectors.

Based on the foregoing analysis, it is assumed that when the first transmission path is projected to the delay domain or to the delay domain and the angle domain, a corresponding projection vector is a DFT base vector in a first precoding submatrix, and the to-be-positioned node selects the DFT base vector to calculate the positioning information, the positioning information measured by the to-be-positioned node is positioning information on the first transmission path. Therefore, if the to-be-positioned node sends, to the reference node, indication information of the DFT base vector in the precoding submatrix used for calculating the positioning information, so that the reference node also calculates the positioning information based on a same DFT base vector/beam, it can be ensured that the positioning information measured by the reference node is positioning information corresponding to the first transmission path, that is a transmission path under projection of the same DFT base vector. This ensures that the positioning information calculated by the to-be-positioned node and the reference node corresponds to a same transmission path, and can prevent the positioning information from being affected by multipath interference.

In some embodiments, to enable the to-be-positioned node and the reference node to complete multipath identification calculation by using a DFT base vector in a same precoding submatrix, the reference node uses a same antenna configuration when sending the downlink measurement reference signal and receiving the uplink measurement reference signal, and the downlink positioning measurement reference signal and the uplink positioning measurement reference signal need to have a same bandwidth. This ensures that the precoding submatrix and the DFT base vector that are reported by the to-be-positioned node have a same dimension as the precoding submatrix and the DFT base vector that are used by the reference node, and further ensures that the reference node and the to-be-positioned node complete positioning information measurement on a same transmission path.

In actual application, a specific implementation procedure may include the following steps. When the downlink positioning measurement reference signal (herein, a CSI-RS is used as an example) is sent, CSI-RS outer weight weighting may be first performed on the reference signal. It is assumed that a CSI-RS signal supports P-port and Q-layer (or stream) sending, a quantity of antennas of the reference node is $N_{BS}$ ($N_{BS}$ is an integer greater than or equal to 3), and a matrix size of an outer weight $W_{out}^{BS}$ is $N_{BS} \times P$. In this case, a dimension of the sent CSI-RS is $N_{BS} \times Q$. After a signal is transmitted through a channel $H_{M_{UE} \times N_{BS}}$ ($M_{UE}$ is a quantity of antennas of the to-be-positioned node), the to-be-positioned node receives a received signal whose dimension is $M_{UE} \times Q$, and obtains a $P \times Q$ signal after weighting solution is performed on the outer weight by using a post-coding matrix whose dimension is $P \times M_{UE}$. Then, the to-be-positioned node performs DFT vector projection on the signal obtained after weighting solution is performed on the outer weight, to identify many paths, and each path corresponds to one DFT base vector in one precoding submatrix. It should be understood that the outer weight herein is a static matrix (or static weight) fixed on the reference node side. When another weight is not applicable (for example, channel correction fails, or no CSI measurement information is reported when a user just accesses a network), weighting may be performed by using the outer weight. Each group of outer weights corresponds to a group of beams.

Then, the to-be-positioned node measures information like T2 and AOA1 on one of the paths. After completing positioning information measurement, the to-be-positioned node adds channel multipath indicator CMPI information in the CSI report, to notify the reference node that the to-be-positioned node measures the positioning information by using which specific DFT base vector in which precoding submatrix. Then, the to-be-positioned node may send the uplink positioning measurement reference signal, for example, an SRS, to the reference node.

The reference node separately obtains the CSI report and the uplink positioning measurement reference signal SRS on the specified time-frequency resource. An SRS signal obtained after layer mapping is performed on the to-be-positioned node side has a dimension of $P \times Q$, a matrix of the outer weight $W_{out}^{UE}$ has a size of $N_{UE} \times P$, and a quantity of transmit antennas of UE is $N_{UE}$. After a signal is transmitted through a channel $H_{M_{BS} \times N_{UE}}$ ($M_{BS}$ is a quantity of antennas of the reference node), the reference node receives a received signal whose dimension is $M_{BS} \times Q$, and obtains the $P \times Q$ signal after weighting solution is performed on the outer weight by using a post-coding matrix whose dimension is $P \times M_{BS}$. Then, the reference node performs DFT vector projection on the signal obtained after weighting solution is performed on the outer weight, and complete measurement of positioning information like T4 and AOA2 by using a DFT base vector the same as that of the to-be-positioned node based on the channel multipath indicator information in the CSI report.

In some embodiments, a method for determining a precoding matrix W by the to-be-positioned node may include: The to-be-positioned node determines a physical channel based on a CSI-RS pilot signal delivered by a network device (for example, the reference node), and then determines W from a predefined precoding matrix group according to a PMI detection algorithm. For a data transmission service, a principle of determining W may include but is not limited to the following. If the network device (for example, the reference node) performs weighting on data based on the precoding matrix W, a signal-to-noise ratio, a throughput, spectrum efficiency, and/or the like of data received by the to-be-positioned node are/is highest.

The precoding matrix W may be formed by a product of $W_1$ and $W_2$. $W_1$ is a block matrix formed by a plurality of DFT base vectors, a $W_1$ codebook is wideband and long-term, and meets $W_1 = \begin{vmatrix} X_1 & 0 \\ 0 & X_1 \end{vmatrix}$. $X_1$ includes K oversampled DFT base vectors/beams. The $W_1$ codebook is a codebook associated with a plurality of paths, and includes 2K DFT base vectors, where K is an integer greater than or equal to 1. The to-be-positioned node needs to notify the positioning reference node of indication information of which base vector that is in the 2K DFT base vectors and that is used by the to-be-positioned node.

The to-be-positioned node may send the PMI to the reference node to indicate the precoding matrix. The PMI includes two parts: a PMI 1 and a PMI 2. The PMI 1 is used to indicate all elements in the precoding matrix $W_1$, and the PMI 2 is used to indicate all elements in $W_2$. The indication information that is of the base vector/beam in the precoding submatrix W1 and that is carried in the CMPI described in the case 2 specifically means information that is about which specific base vector in the K DFT base vectors in W1 associated with the multipath and that is carried in the CMPI.

It should be understood that, a principle of selecting a precoding submatrix including a DFT base vector used to measure positioning information is to minimize a delay of TOA1 and/or maximize an RSRP of the first positioning measurement reference signal; and a principle of selecting a precoding submatrix used for data precoding in data transmission is mainly to maximize a signal-to-noise ratio, a throughput, spectral efficiency, or the like. Therefore, a precoding submatrix that is used to estimate positioning information and that is selected based on different principles and based on a same reference signal and a same precoding submatrix is irrelevant to a PMI codebook or a precoding submatrix that is recommended by the to-be-positioned node to the reference node and that is used for downlink PDSCH data precoding weighting. The two precoding submatrices may be the same or may be different. Therefore, the first indication information needs to be additionally sent to the reference node, to specifically indicate which DFT base vector/beam that is in the precoding submatrix including the K DFT base vectors/beams and that is used by the to-be-positioned node to estimate the positioning information.

Different from that the first indication information is represented by one bit in the case 1, a bit size of the first indication information in the case 2 may be a submatrix size $U = [\log_2 (K)]$, that is, a quantity of index bits of the K DFT base vectors/beams in a diagonal block matrix $X_1$ in the precoding submatrix $W_1$. The CPMI is used to indicate, to the reference node, which base vector/beam in the K DFT base vectors/beams is used by the to-positioned node to measure the positioning information.

According to the foregoing multipath single-anchor positioning method, a to-be-positioned node indicates, to a reference node, which DFT base vector/beam in a precoding submatrix selected by the to-be-positioned node when the to-be-positioned node measures positioning information, so that the reference node can measure positioning information based on a same DFT base vector/beam. Because the same DFT base vector corresponds to a same transmission path or a transmission path in a same beam, it can be ensured that both the to-be-positioned node and the reference node complete positioning information measurement based on the same transmission path or the transmission path in the same beam, to reduce multipath interference and obtain more accurate positioning precision.

In addition, in some other embodiments in the case 2, a codebook indicated by the PMI reported by the to-be-positioned node may be spatial domain two-dimensional (a case 3 for short below). In this case, the to-be-positioned node and the reference node measure the positioning information based on a spatial-frequency DFT two-dimensional base vector.

For example, the to-be-positioned node measures the positioning information. The to-be-positioned node may project a received CSI-RS signal to a spatial domain DFT base vector and a frequency domain DFT base vector (equivalent to transforming the signal into angle domain and delay domain). In this case, each path corresponds to one spatial-frequency two-dimensional DFT base vector. Therefore, in the CSI report reported by the to-be-positioned node to the reference node, the to-be-positioned node needs to indicate, to the reference node, a spatial-frequency two-dimensional DFT base vector used by the to-be-positioned node to measure the positioning information, to ensure that the reference node and the to-be-positioned node calculate the third positioning information by using a same spatial-frequency two-dimensional DFT base vector.

In the case 3, the precoding submatrix indicated by the PMI reported by the to-be-positioned node is spatial-frequency two-dimensional, similar to the spatial-frequency precoding submatrix in 3GPP release 16 (R16). In this case, the CMPI indicates that the to-be-positioned node measures the first positioning information by using a spatial-frequency DFT base vector pair corresponding to which <angle, delay> pair.

A spatial-frequency two-dimensional codebook of 3GPP R16 is used as an example. The precoding matrix may be represented as $W = W_1 \widetilde{W}_2 W_f^H$, where $W_1$ represents spatial domain compression, $W_f^H$ represents frequency domain compression, and $\widetilde{W}_2$ represents a linear combination coefficient. In this case, $W_1$ may include a submatrix including a spatial domain DFT base vector, and $W_f^H$ may include a submatrix including a frequency domain DFT base vector. Therefore, the CMPI indication information needs to include an indication bit used to indicate which spatial domain DFT base vector in $W_1$ is selected and which frequency domain DFT base vector in $W_f^H$ is selected. For example, a size of the indication bit is S = [log$_2$(U) + log$_2$(V)], where U and V are dimensions/index values of the spatial domain DFT base vector and the frequency domain DFT base vector, respectively, and log$_2$(U) and log$_2$(V) are quantities of index bits of the spatial domain DFT base vector and the frequency domain DFT base vector, respectively. The CMPI is used to indicate, to the reference node, which spatial domain DFT base vector/beam and which frequency domain DFT base vector/beam are used by the to-be-positioned node to measure the first positioning information.

According to the foregoing multipath single-anchor positioning method, a to-be-positioned node indicates, to a reference node, a DFT base vector selected by the to-be-positioned node when the to-be-positioned node measures positioning information, so that the reference node can measure positioning information based on a same DFT base vector. Because the same DFT base vector corresponds to a same transmission path or a transmission path in a same beam, it can be ensured that both the to-be-positioned node and the reference node complete positioning information measurement based on the same transmission path or the transmission path in the same beam, to reduce multipath interference and obtain more accurate positioning precision.

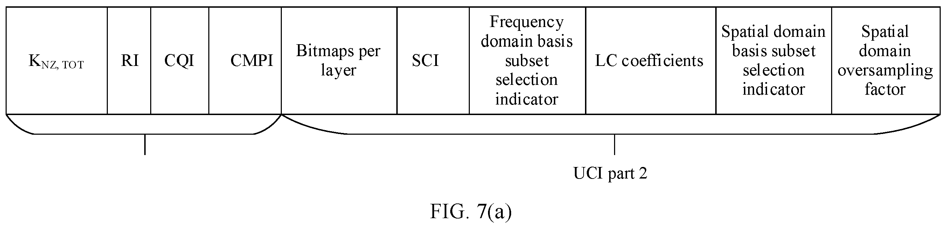

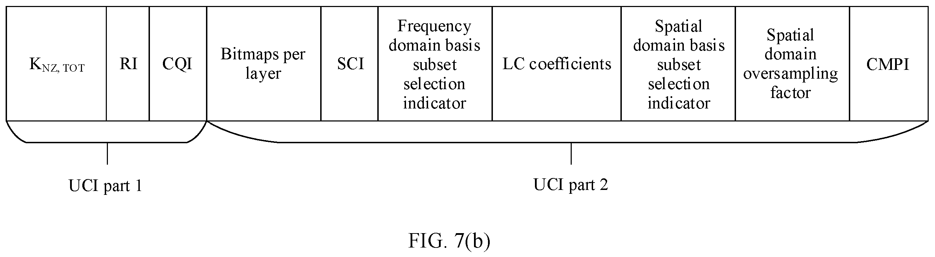

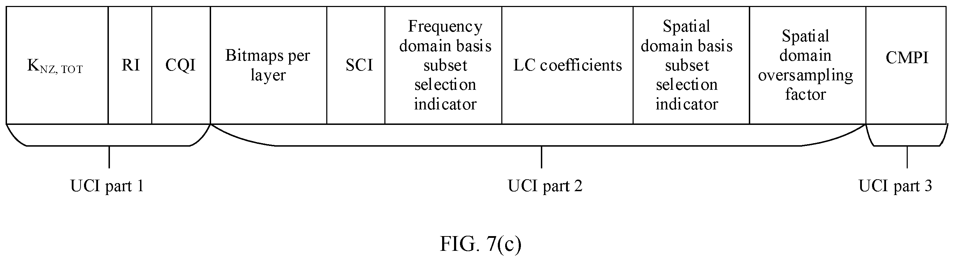

For example, there may be a plurality of locations of the first indication information in the CSI report. This is not limited in this application. FIG. 7(a), FIG. 7(b), and FIG. 7(c) are schematic diagrams of a structure of different locations of the first indication information in the CSI report by using an example in which the first indication information is a CPMI (specific content may include the content described in the foregoing three cases).

In some embodiments, as shown in FIG. 7(a), in a manner of carrying the CMPI in the CSI report, a bit may be added to a UCI (Uplink) part 1 in the CSI report to carry the indication information.

Alternatively, as shown in FIG. 7(b), in a manner of carrying the CMPI in the CSI report, a bit may be added to a UCI part 2 in the CSI report to carry the CMPI indication information.

Alternatively, as shown in FIG. 7(c), the CMPI may be separately placed as a newly added UCI part 3 in the CSI report.

In addition to the foregoing CQI, RI, and CMPI, the CSI in the UCI part 1 in FIG. 7(a), FIG. 7(b), and FIG. 7(c) further includes K$_{NZ,TOT}$, used to indicate a quantity of all bitmaps per layer, and the bitmaps per layer correspond to a bitmap per layer, a strongest coefficient indicator (strongest coefficient indicator, SCI), a frequency domain (frequency domain, FD) basis subset selection indicator, a spatial domain (spatial domain, SD) basis subset selection indicator, and a spatial domain oversampling factor (SD oversampling factor).

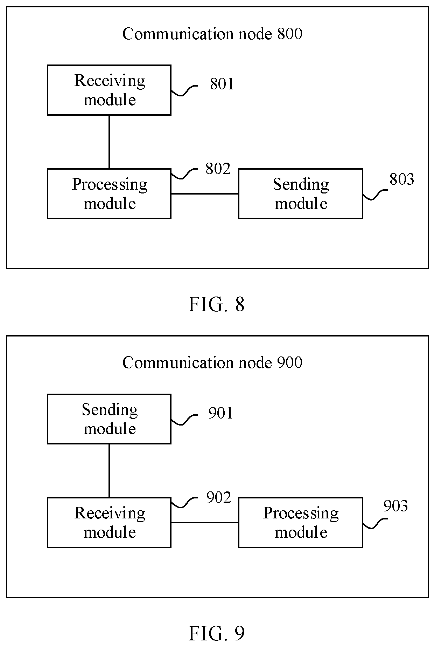

For example, FIG. 8 is a schematic diagram of a structure of a communication node according to an embodiment of this application. A communication node 800 includes a receiving module 801, a processing module 802, and a sending module 803.

In an implementation, the receiving module 801 may be configured to receive a first positioning measurement reference signal transmitted through N transmission paths. The first positioning measurement reference signal is sent by a reference node, and N is an integer greater than 1.

In an implementation, the processing module 802 may be configured to measure first positioning information based on the first positioning measurement reference signal on a first transmission path. The first transmission path is one of the N transmission paths.

In an implementation, the sending module 803 may be configured to send first indication information and a second positioning measurement reference signal to a reference node. The first indication information is used to indicate the first transmission path, so that the reference node measures second positioning information on the first transmission path

In an implementation, the first transmission path is a first-arrival path or a strongest path. The first positioning measurement reference signal has a lowest transmission delay on the first-arrival path, and the first positioning measurement reference signal has smallest attenuation on the strongest path. The processing module 802 may be further configured to determine the first transmission path based on a transmission delay and/or a signal power of the first positioning measurement reference signal.

In an implementation, the processing module 802 may be configured to measure the first positioning information based on the first positioning measurement reference signal on the first transmission path, including: recording an arrival moment T2 of the first positioning measurement reference signal; and measuring an angle of arrival AOA1 of the first positioning measurement reference signal.

In an implementation, the processing module 802 may be further configured to: record a sending moment T3 of the second positioning measurement reference signal; and/or measure an angle of departure AOD1 of the second positioning measurement reference signal.

In an implementation, the sending module 803 may be further configured to send third positioning information to a location service node. The third positioning information includes first time information. Alternatively, the third positioning information includes first time information and first angle information. The first time information includes: the arrival moment T2 of the first positioning measurement reference signal and the sending moment T3 of the second positioning measurement reference signal; or a difference T3 - T2 between the sending moment T3 of the second positioning measurement reference signal and the arrival moment T2 of the first positioning measurement reference signal. The first angle information includes: the angle of arrival AOA1 of the first positioning measurement reference signal; and/or the angle of departure AOD1 of the second positioning measurement reference signal.

Alternatively, in an implementation, the receiving module 801 may be configured to receive a first positioning measurement reference signal transmitted through N transmission paths. The first positioning measurement reference signal is sent by a reference node, and N is an integer greater than 1.

The processing module 802 may be configured to measure first positioning information based on first intermediate information. The first intermediate information includes a DFT base vector corresponding to a first transmission path in a precoding matrix, and the first transmission path is one of the N transmission paths.

The sending module 803 may be configured to send first indication information and a second positioning measurement reference signal to a reference node. The first indication information is used to indicate the first intermediate information, so that the reference node measures second positioning information based on the first intermediate information.

In an implementation, that the first indication information is used to indicate the first intermediate information includes: The first indication information includes identification information of the DFT base vector.

In an implementation, that the first indication information is used to indicate the first intermediate information includes: The first indication information includes index information of the DFT base vector in the precoding submatrix.

In an implementation, the DFT base vector is a frequency domain DFT base vector. Alternatively, the DFT base vector is a spatial domain and frequency domain two-dimensional base vector.

In an implementation, the first transmission path is a first-arrival path or a strongest path. The first positioning measurement reference signal has a lowest transmission delay on the first-arrival path, and the first positioning measurement reference signal has smallest attenuation on the strongest path. The processing module 802 may be further configured to determine the first transmission path based on a transmission delay and/or a signal power of the first positioning measurement reference signal.

In an implementation, the processing module 802 may be further configured to: record a first arrival moment T2 of the first positioning measurement reference signal; and measure a first angle of arrival AOA1 of the first positioning measurement reference signal.

In an implementation, the processing module 802 may be further configured to: record a first sending moment T3 of the second positioning measurement reference signal; and/or measure a first angle of departure AOD1 of the second positioning measurement reference signal.

In an implementation, the sending module 803 may be further configured to send third positioning information to a location service node. The third positioning information includes first time information. Alternatively, the third positioning information includes first time information and first angle information. The first time information includes: the arrival moment T2 of the first positioning measurement reference signal and the sending moment T3 of the second positioning measurement reference signal; or a difference T3 - T2 between the sending moment T3 of the second positioning measurement reference signal and the arrival moment T2 of the first positioning measurement reference signal. The first angle information includes: the angle of arrival AOA1 of the first positioning measurement reference signal; and/or the angle of departure AOD1 of the second positioning measurement reference signal.

In an implementation, the first indication information is carried in channel state information.

In an implementation, the channel state information further includes but is not limited to: precoding matrix indicator PMI information, channel quality indicator CQI information, and rank indicator RI information of a channel matrix.

For example, FIG. 9 is a schematic diagram of a structure of a communication node according to an embodiment of this application. A communication node 900 may be a reference node. The communication node 900 includes a sending module 901, a receiving module 902, and a processing module 903.

In an implementation, the sending module 901 may be configured to send a first positioning measurement reference signal. The first positioning measurement reference signal is transmitted to a to-be-positioned node through N transmission paths, and N is an integer greater than 1.

The receiving module 902 may be configured to receive first indication information and a second positioning measurement reference signal that are sent by the to-be-positioned node. The first indication information is used to indicate a first transmission path, and the first transmission path is one of the N transmission paths.

The processing module 903 may be configured to measure second positioning information based on the first transmission path.

In an implementation, the first transmission path is a first-arrival path or a strongest path. The first positioning measurement reference signal has a lowest transmission delay on the first-arrival path, and the first positioning measurement reference signal has smallest attenuation on the strongest path.

In an implementation, that the first indication information is represented by 1-bit information, and the first indication information is used to indicate information about the first transmission path includes: When the first transmission path is the first-arrival path, the first indication information is 1. When the first transmission path is the strongest path, the first indication information is 0. Alternatively, when the first transmission path is the first-arrival path, the first indication information is 0. When the first transmission path is the strongest path, the first indication information is 1.

In an implementation, the processing module 903 may be specifically configured to: record an arrival moment T4 of the second positioning measurement reference signal; and measure an angle of arrival AOA2 of the second positioning measurement reference signal.

In an implementation, the processing module 903 may be specifically configured to: record a sending moment T1 of the first positioning measurement reference signal; and/or measure an angle of departure AOD2 of the first positioning measurement reference signal.

In an implementation, the sending module 901 may be further configured to send fourth positioning information to a location service node. The fourth positioning information includes second time information. Alternatively, the fourth positioning information includes second time information and second angle information. The second time information includes: the arrival moment T4 of the second positioning measurement reference signal and the sending moment T1 of the first positioning measurement reference signal; or a difference T4 - T1 between the arrival moment T4 of the second positioning measurement reference signal and the sending moment T1 of the first positioning measurement reference signal. The first angle information includes: an angle of departure AOA2 of the first positioning measurement reference signal, and/or an angle of arrival AOD2 of the second positioning measurement reference signal.

In an implementation, the first indication information is carried in channel state information.

In an implementation, the channel state information further includes but is not limited to: precoding matrix indicator PMI information, channel quality indicator CQI information, and rank indicator RI information of a channel matrix.

Alternatively, in an implementation, the sending module 901 may be configured to send a first positioning measurement reference signal. The first positioning measurement reference signal is transmitted to a to-be-positioned node through N transmission paths, and N is an integer greater than 1.

The receiving module 902 may be configured to receive first indication information and a second positioning measurement reference signal that are sent by the to-be-positioned node. The first indication information is used to indicate first intermediate information, the first intermediate information is a DFT base vector corresponding to a first transmission path, and the first transmission path is one of the N transmission paths.

The processing module 903 may be configured to measure second positioning information based on the first measurement information.

In an implementation, that the first indication information is used to indicate the first intermediate information includes: The first indication information includes identification information of the DFT base vector/beam.

In an implementation, that the first indication information is used to indicate the first intermediate information includes: The first indication information includes index information of a DFT base vector in a precoding submatrix.

In an implementation, the DFT base vector is a domain DFT base vector. Alternatively, the DFT base vector is a spatial-frequency two-dimensional base vector.

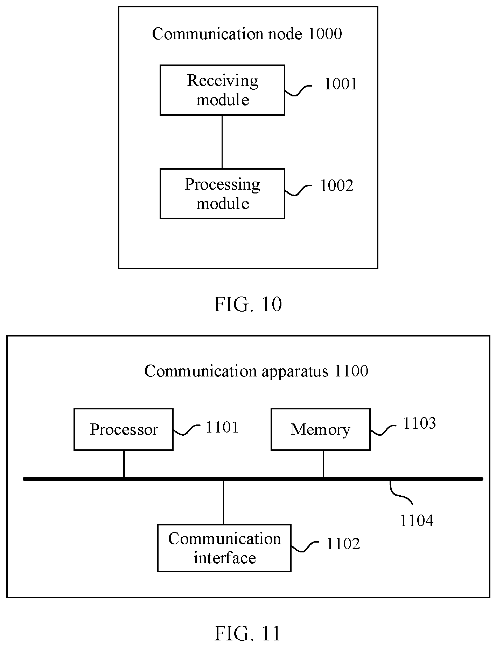

For example, FIG. 10 is a schematic diagram of a structure of still another communication node. A communication node 1000 includes a receiving module 1001 and a processing module 1002.

In an implementation, the receiving module 1001 may be configured to receive third positioning information sent by a to-be-positioned node and fourth positioning information sent by a reference node. The third positioning information and the fourth positioning information respectively include positioning information obtained by the to-be-positioned node based on a first transmission path and positioning information obtained by the reference node based on the first transmission path. Alternatively, the third positioning information and the fourth positioning information respectively include positioning information obtained by the to-be-positioned node based on same first intermediate information and positioning information obtained by the reference node based on the same first intermediate information. The first intermediate information includes a DFT base vector

In an implementation, the processing module 1002 may be configured to position the to-be-positioned node based on the third positioning information and the fourth positioning information.

In an implementation, the processing module 1002 may be specifically configured to: determine a round trip time based on the first time information and the second time information; calculate the positioning information of the to-be-positioned node based on the round trip time, the AOA1 in the first angle information, and the AOD2 in the second angle information; calculate the positioning information of the to-be-positioned node based on the round trip time, the AOD1 in the first angle information, and the AOA2 in the second angle information; calculate the positioning information of the to-be-positioned node based on the round trip time, a weighted value of the AOA1 and the AOD1 in the first angle information, and the AOA2 in the second angle information; calculate the positioning information of the to-be-positioned node based on the round trip time, the weighted value of the AOA1 and the AOD1 in the first angle information, and the AOD2 in the second angle information; calculate the positioning information of the to-be-positioned node based on the round trip time, the weighted value of the AOA1 and the AOD1 in the first angle information, and a weighted value of the AOA2 and the AOD2 in the second angle information; calculate the positioning information of the to-be-positioned node based on the round trip time, the AOA1 in the first angle information, and the weighted value of the AOA2 and the AOD2 in the second angle information; or calculate the positioning information of the to-be-positioned node based on the round trip time, the AOD1 in the first angle information, and the weighted value of the AOA2 and AOD2 in the second angle information.

FIG. 11 is a schematic diagram of a structure of a communication apparatus according to an embodiment of this application. A communication apparatus 1100 includes at least one processor 1101, a communication interface 1102, and a memory 1103. The communication interface is used for information exchange between the communication apparatus and another communication apparatus. The memory stores computer program instructions. When the program instructions are executed by the at least one processor, the communication apparatus is enabled to implement a function of the positioning manner triggering method described above on any one of the following nodes: the source node or the target node.

The processor 1101, the communication interface 1102, and the memory 1103 are connected to each other through a bus 1104. The bus 1104 may be a PCI bus, an EISA bus, or the like. The bus 1104 may be classified into an address bus, a data bus, a control bus, and the like. For ease of representation, only one bold line is used to represent the bus in FIG. 11, but this does not mean that there is only one bus or only one type of bus.

This embodiment of this application further provides a non-volatile storage medium. The non-volatile storage medium stores one or more pieces of program code. When the processor 1101 of the communication apparatus 1100 executes the program code, the communication apparatus 1100 is enabled to implement a function of the positioning manner triggering method described above on any one of the following nodes: the source node or the target node.

For detailed descriptions of the units or the modules in the communication apparatus 1100 provided in this embodiment of this application and technical effects brought after the units perform the related method steps performed by the source node or the target node in any method embodiment of this application, refer to the related descriptions in the method embodiment of this application. Details are not described herein again.

The communication node, the communication apparatus, the computer storage medium, the computer program product, and the chip provided in embodiments of this application are all configured to perform the methods provided above. Therefore, for beneficial effects that can be achieved by the image generation apparatus, the terminal device, the computer storage medium, the computer program product, and the chip, refer to the beneficial effects corresponding to the methods provided above. Details are not described herein again.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1. A multipath single-anchor positioning method performed by a multipath single-anchor positioning system comprising a to-be-positioned node, a reference node and a location service node, the method comprising:

   receiving (S301, S506), by the to-be-positioned node, a first positioning measurement reference signal transmitted through N transmission paths, wherein the first positioning measurement reference signal is sent by the reference node, and N is an integer greater than 1;
   measuring (S302,), by the to-be-positioned node, first positioning information based on the first positioning measurement reference signal on a first transmission path, wherein the first transmission path is one of the N transmission paths; and
   sending (S303, S508, S509), by the to-be-positioned node, first indication information and a second positioning measurement reference signal to the reference node,
   wherein the first indication information is used to indicate the first transmission path, so that the reference node measures second positioning information on the first transmission path;
   wherein the measuring (S302), by the to-be-positioned node, first positioning information based on the first positioning measurement reference signal on a first transmission path comprises:

      recording, by the to-be-positioned node, an arrival moment T2 of the first positioning measurement reference signal; and
      measuring, by the to-be-positioned node, an angle of arrival, AOA1, of the first positioning measurement reference signal;

   wherein the method further comprises:

      recording, by the to-be-positioned node, a sending moment T3 of the second positioning measurement reference signal; and/or
      measuring, by the to-be-positioned node, an angle of departure, AOD1, of the second positioning measurement reference signal;

   wherein the method further comprises:

      sending (S511), by the to-be-positioned node, third positioning information to the location service node, wherein the third positioning information comprises first time information, or the third positioning information comprises first time information and first angle information, wherein
      the first time information comprises:

         the arrival moment T2 of the first positioning measurement reference signal and the sending moment T3 of the second positioning measurement reference signal; or
         a difference T3 - T2 between the sending moment T3 of the second positioning measurement reference signal and the arrival moment T2 of the first positioning measurement reference signal; and

      the first angle information comprises:

the angle of arrival, AOA1, of the first positioning measurement reference signal; and/or
the angle of departure, AOD1, of the second positioning measurement reference signal;

wherein the method further comprises:

measuring, by the reference node, the second positioning information on the first transmission path based on the first indication information;
wherein the measuring, by the reference node, the second positioning information on the first transmission path based on the first indication information comprises:

recording, by the reference node, an arrival moment T4 of the second positioning measurement reference signal; and
measuring, by the reference node, an angle of arrival, AOA2, of the second positioning measurement reference signal;

wherein the method further comprises:

recording, by the reference node, a sending moment T1 of the first positioning measurement reference signal; and/or
measuring, by the reference node, an angle of departure, AOD2, of the first positioning measurement reference signal;

wherein the method further comprises:

sending (S512), by the reference node, fourth positioning information to the location service node, wherein the fourth positioning information comprises second time information, or the fourth positioning information comprises second time information and second angle information, wherein
the second time information comprises:

the arrival moment T4 of the second positioning measurement reference signal and the sending moment T1 of the first positioning measurement reference signal; or
a difference T4 - T1 between the arrival moment T4 of the second positioning measurement reference signal and the sending moment T1 of the first positioning measurement reference signal; and

the second angle information comprises:

the angle of arrival, AOA2, of the second positioning measurement reference signal; and/or the angle of departure, AOD2, of the first positioning measurement reference signal;

wherein the method further comprises:

positioning, by the location service node, the to-be-positioned node based on the third positioning information and the fourth positioning information;
wherein the positioning, by the location service node, the to-be-positioned node based on the third positioning information and the fourth positioning information comprises:

determining, by the location service node, a round trip time based on the first time information and the second time information;
calculating, by the location service node, positioning information of the to-be-positioned node based on the round trip time, the AOA1 in the first angle information, and the AOD2 in the second angle information;
calculating, by the location service node, the positioning information of the to-be-positioned node based on the round trip time, the AOD1 in the first angle information, and the AOA2 in the second angle information;
calculating, by the location service node, the positioning information of the to-be-positioned node based on the round trip time, a weighted value of the AOA1 and the AOD1 in the first angle information, and the AOA2 in the second angle information;
calculating, by the location service node, the positioning information of the to-be-positioned node based on the round trip time, the weighted value of the AOA1 and the AOD1 in the first angle information, and the AOD2 in the second angle information;
calculating, by the location service node, the positioning information of the to-be-positioned node based on the round trip time, the weighted value of the AOA1 and the AOD1 in the first angle information, and a weighted value of the AOA2 and the AOD2 in the second angle information;
calculating, by the location service node, the positioning information of the to-be-positioned node based on the round trip time, the AOA1 in the first angle information, and the weighted value of the AOA2 and the AOD2 in the second angle information; or
calculating, by the location service node, the positioning information of the to-be-positioned node based on the round trip time, the AOD1 in the first angle information, and the weighted value of the AOA2 and the AOD2 in the second angle information.

2. The method according to claim 1, wherein the first transmission path is a first-arrival path or a strongest path, the first positioning measurement reference signal has a lowest transmission delay on the first-arrival path, the first positioning measurement reference signal has smallest attenuation on the strongest path, and the method further comprises: determining, by the to-be-positioned node, the first transmission path based on a transmission delay and/or a signal power of the first positioning measurement reference signal.

3. The method according to claim 2, wherein the first indication information is represented by 1-bit information, and that the first indication information is used to indicate information about the first transmission path comprises:

when the first transmission path is the first-arrival path, the first indication information is 1; and
when the first transmission path is the strongest path, the first indication information is 0; or
when the first transmission path is the first-arrival path, the first indication information is 0; and
when the first transmission path is the strongest path, the first indication information is 1.

4. The method according to any one of claims 1 to 3, wherein the first indication information is carried in channel state information.

5. The method according to claim 4, wherein the channel state information further comprises but is not limited to: precoding matrix indicator PMI information, channel quality indicator, CQI, information, and rank indicator RI information of a channel matrix.

6. A multipath single-anchor positioning system comprising a to-be-positioned node, a reference node and a location service node configured to carry out the method according to any one of claims 1 to 5.

**Patentansprüche**

1. Mehrweg-Einzelankerpositionsbestimmungsverfahren, das durch ein Mehrweg-Einzelankerpositionsbestimmungssystem durchgeführt wird, das einen zu positionierenden Knoten, einen Referenzknoten und einen Standortdienstknoten umfasst, wobei das Verfahren Folgendes umfasst:

Empfangen (S301, S506), durch den zu positionierenden Knoten, eines ersten Positionsbestimmungsmessungsreferenzsignals, das über N Übertragungswege übertragen wird, wobei das erste Positionsbestimmungsmessungsreferenzsignal durch den Referenzknoten gesendet wird und N eine ganze Zahl größer als 1 ist;
Messen (S302), durch den zu positionierenden Knoten, erster Positionsbestimmungsinformationen basierend auf dem ersten Positionsbestimmungsmessungsreferenzsignal auf einem ersten Übertragungsweg, wobei der erste Übertragungsweg einer der N Übertragungswege ist; und
Senden (S303, S508, S509), durch den zu positionierenden Knoten, erster Anzeigeinformationen und eines zweiten Positionsbestimmungsmessungsreferenzsignals an den Referenzknoten,
wobei die ersten Anzeigeinformationen dazu verwendet werden, den ersten Übertragungsweg anzuzeigen, so dass der Referenzknoten zweite Positionsbestimmungsinformationen auf dem ersten Übertragungsweg misst;
wobei das Messen (S302), durch den zu positionierenden Knoten, erster Positionsbestimmungsinformationen basierend auf dem ersten Positionsbestimmungsmessungsreferenzsignal auf einem ersten Übertragungsweg Folgendes umfasst:

Aufzeichnen, durch den zu positionierenden Knoten, eines Ankunftszeitpunkts T2 des ersten Positionsbestimmungsmessungsreferenzsignals; und
Messen, durch den zu positionierenden Knoten, eines Ankunftswinkels, AOA1, des ersten Positionsbestimmungsmessungsreferenzsignals;
wobei das Verfahren ferner Folgendes umfasst:

Aufzeichnen, durch den zu positionierenden Knoten, eines Sendezeitpunkts T3 des zweiten Positionsbestimmungsmessungsreferenzsignals; und/oder Messen, durch den zu positionierenden Knoten, eines Abstrahlwinkels, AOD1, des zweiten Positionsbestimmungsmessungsreferenzsignals; wobei das Verfahren ferner Folgendes umfasst:

Senden (S511), durch den zu positionierenden Knoten, dritter Positionsbestimmungsinformationen an den Standortdienstknoten, wobei die dritten Positionsbestimmungsinformationen erste Zeitinformationen umfassen oder die dritten Positionsbestimmungsinformationen erste Zeitinformationen und erste Winkelinformationen umfassen, wobei die ersten Zeitinformationen Folgendes umfassen:

den Ankunftszeitpunkt T2 des ersten Positionsbestimmungsmessungsreferenzsignals und den Sendezeitpunkt T3 des zweiten Positionsbestimmungsmessungsreferenzsignals; oder einen Unterschied T3-T2 zwischen dem Sendezeitpunkt T3 des zweiten Positionsbestimmungsmessungsreferenzsignals und dem Ankunftszeitpunkt T2 des ersten Positionsbestimmungsmessungsreferenzsignals; und die ersten Winkelinformationen Folgendes umfassen:

den Ankunftswinkel, AOA1, des ersten Positionsbestimmungsmessungsreferenzsignals; und/oder den Abstrahlwinkel, AOD1, des zweiten Positionsbestimmungsmessungsreferenzsignals; wobei das Verfahren ferner Folgendes umfasst:

Messen, durch den Referenzknoten, der zweiten Positionsbestimmungsinformationen auf dem ersten Übertragungsweg basierend auf den ersten Anzeigeinformationen; wobei das Messen, durch den Referenzknoten, der zweiten Positionsbestimmungsinformationen auf dem ersten Übertragungsweg basierend auf den ersten Anzeigeinformationen Folgendes umfasst:

Aufzeichnen, durch den Referenzknoten, eines Ankunftszeitpunkts **T4** des zweiten Positionsbestimmungsmessungsreferenzsignals; und Messen, durch den Referenzknoten, eines Ankunftswinkels, AOA2, des zweiten Positionsbestimmungsmessungsreferenzsignals; wobei das Verfahren ferner Folgendes umfasst:

Aufzeichnen, durch den Referenzknoten, eines Sendezeitpunkts T1 des ersten Positionsbestimmungsmessungsreferenzsignals; und/oder Messen, durch den Referenzknoten, eines Abstrahlwinkels, AOD2, des ersten Positionsbestimmungsmessungsreferenzsignals; wobei das Verfahren ferner Folgendes umfasst:

Senden (S512), durch den Referenzknoten, vierter Positionsbestimmungsinformationen an den Standortdienstknoten, wobei die vierten Positionsbestimmungsinformationen zweite Zeitinformationen umfassen oder die vierten Positionsbestimmungsinformationen zweite Zeitinformationen und zweite Winkelinformationen umfassen, wobei die zweiten Zeitinformationen Folgendes umfassen:

den Ankunftszeitpunkt T4 des zweiten Positionsbestimmungsmessungsreferenzsignals und den Sendezeitpunkt T1 des ersten Positionsbestimmungsmessungsreferenzsignals; oder einen Unterschied **T4-T1** zwischen dem Ankunftszeitpunkt **T4** des zweiten Positionsbestimmungsmessungsreferenzsignals und dem Sendezeitpunkt T1 des ersten Positionsbestimmungsmessungsreferenzsignals; und die zweiten Winkelinformationen Folgendes umfassen:

den Ankunftswinkel, AOA2, des zweiten Positionsbestimmungsmessungsreferenzsignals; und/oder den Abstrahlwinkel, AOD2, des ersten Positionsbestimmungsmessungsreferenzsignals;

wobei das Verfahren ferner Folgendes umfasst:

Positionieren, durch den Standortdienstknoten, des zu positionierenden Knotens basierend auf den dritten Positionsbestimmungsinformationen und den vierten Positionsbestimmungsinformationen;

wobei das Positionieren, durch den Standortdienstknoten, des zu positionierenden Knotens basierend auf den dritten Positionsbestimmungsinformationen und den vierten Positionsbestimmungsinformationen Folgendes umfasst:

Bestimmen, durch den Standortdienstknoten, einer Umlaufzeit basierend auf den ersten Zeitinformationen und den zweiten Zeitinformationen;

Berechnen, durch den Standortdienstknoten, von Positionsbestimmungsinformationen des zu positionierenden Knotens basierend auf der Umlaufzeit, dem AOA1 in den ersten Winkelinformationen und dem AOD2 in den zweiten Winkelinformationen;

Berechnen, durch den Standortdienstknoten, der Positionsbestimmungsinformationen des zu positionierenden Knotens basierend auf der Umlaufzeit, dem AOD1 in den ersten Winkelinformationen und dem AOA2 in den zweiten Winkelinformationen;

Berechnen, durch den Standortdienstknoten, der Positionsbestimmungsinformationen des zu positionierenden Knotens basierend auf der Umlaufzeit, einem gewichteten Wert des AOA1 und des AOD1 in den ersten Winkelinformationen und dem AOA2 in den zweiten Winkelinformationen;

Berechnen, durch den Standortdienstknoten, der Positionsbestimmungsinformationen des zu positionierenden Knotens basierend auf der Umlaufzeit, dem gewichteten Wert des AOA1 und des AOD1 in den ersten Winkelinformationen und dem AOD2 in den zweiten Winkelinformationen;

Berechnen, durch den Standortdienstknoten, der Positionsbestimmungsinformationen des zu positionierenden Knotens basierend auf der Umlaufzeit, dem gewichteten Wert des AOA1 und des AOD1 in den ersten Winkelinformationen und einem gewichteten Wert des AOA2 und des AOD2 in den zweiten Winkelinformationen;

Berechnen, durch den Standortdienstknoten, der Positionsbestimmungsinformationen des zu positionierenden Knotens basierend auf der Umlaufzeit, dem AOA1 in den ersten Winkelinformationen und dem gewichteten Wert des AOA2 und des AOD2 in den zweiten Winkelinformationen; oder

Berechnen, durch den Standortdienstknoten, der Positionsbestimmungsinformationen des zu positionierenden Knotens basierend auf der Umlaufzeit, dem AOD1 in den ersten Winkelinformationen und dem gewichteten Wert des AOA2 und des AOD2 in den zweiten Winkelinformationen.

2. Verfahren nach Anspruch 1, wobei der erste Übertragungsweg ein Erstankunftsweg oder ein stärkster Weg ist, das erste Positionsbestimmungsmessungsreferenzsignal eine geringste Übertragungsverzögerung auf dem Erstankunftsweg aufweist, das erste Positionsbestimmungsmessungsreferenzsignal eine geringste Dämpfung auf dem stärksten Weg aufweist und das Verfahren ferner Folgendes umfasst:
Bestimmen, durch den zu positionierenden Knoten, des ersten Übertragungswegs basierend auf einer Übertragungsverzögerung und/oder einer Signalleistung des ersten Positionsbestimmungsmessungsreferenzsignals.

3. Verfahren nach Anspruch 2, wobei die ersten Anzeigeinformationen durch 1-Bit-Informationen dargestellt werden und die Tatsache, dass die ersten Anzeigeinformationen dazu verwendet werden, Informationen über den ersten Übertragungsweg anzuzeigen, Folgendes umfasst:

wenn der erste Übertragungsweg der Erstankunftsweg ist, sind die ersten Anzeigeinformationen 1; und
wenn der erste Übertragungsweg der stärkste Weg ist, sind die ersten Anzeigeinformationen 0; oder
wenn der erste Übertragungsweg der Erstankunftsweg ist, sind die ersten Anzeigeinformationen 0; und
wenn der erste Übertragungsweg der stärkste Weg ist, sind die ersten Anzeigeinformationen 1.

4. Verfahren nach einem der Ansprüche 1 bis 3, wobei die ersten Anzeigeinformationen in Kanalzustandsinformationen enthalten sind.

5. Verfahren nach Anspruch 4, wobei die Kanalzustandsinformationen ferner Folgendes umfassen, aber nicht beschränkt sind auf:
Vorcodierungsmatrixindikator-Informationen, PMI-Informationen, Kanalqualitätsindikator-Informationen, CQI-Informationen, und Rangindikator-Informationen, RI-Informationen, einer Kanalmatrix.

6. Mehrweg-Einzelankerpositionsbestimmungssystem, umfassend einen zu positionierenden Knoten, einen Referenzknoten und einen Standortdienstknoten, das dazu konfiguriert ist, das Verfahren nach einem der Ansprüche 1 bis 5 auszuführen.

**Revendications**

1. Procédé de positionnement à ancre unique à multiples chemins réalisé par un système de positionnement à ancre unique à multiples chemins comprenant un nœud à positionner, un nœud de référence et un nœud de service de localisation, le procédé comprenant :

la réception (S301, S506), par le nœud à positionner, d'un premier signal de référence de mesure de positionnement transmis via N chemins de transmission, dans lequel le premier signal de référence de mesure de positionnement est envoyé par le nœud de référence, et N est un entier supérieur à 1 ;
la mesure (S302), par le nœud à positionner, de premières informations de positionnement sur la base du premier signal de référence de mesure de positionnement sur un premier chemin de transmission, dans lequel le premier chemin de transmission est l'un des N chemins de transmission ; et
l'envoi (S303, S508, S509), par le nœud à positionner, de premières informations d'indication et d'un second signal de référence de mesure de positionnement au nœud de référence,
dans lequel les premières informations d'indication sont utilisées pour indiquer le premier chemin de transmission, de sorte que le nœud de référence mesure les deuxièmes informations de positionnement sur le premier chemin de transmission ;
dans lequel la mesure (S302), par le nœud à positionner, de premières informations de positionnement sur la base du premier signal de référence de mesure de positionnement sur un premier chemin de transmission comprend :

l'enregistrement, par le nœud à positionner, d'un instant d'arrivée T2 du premier signal de référence de mesure de positionnement ; et
la mesure, par le nœud à positionner, d'un angle d'arrivée, AOA1, du premier signal de référence de mesure de positionnement ;
dans lequel le procédé comprend également :

l'enregistrement, par le nœud à positionner, d'un instant d'envoi T3 du second signal de référence de mesure de positionnement ; et/ou

la mesure, par le nœud à positionner, d'un angle de départ, AOD1, du second signal de référence de mesure de positionnement ;

dans lequel le procédé comprend également :

l'envoi (S511), par le nœud à positionner, de troisièmes informations de positionnement au nœud de service de localisation, dans lequel les troisièmes informations de positionnement comprennent de premières informations de temps, ou les troisièmes informations de positionnement comprennent de premières informations de temps et de premières informations d'angle, dans lequel

les premières informations de temps comprennent :

l'instant d'arrivée T2 du premier signal de référence de mesure de positionnement et l'instant d'envoi T3 du second signal de référence de mesure de positionnement ; ou

une différence T3 - T2 entre l'instant d'envoi T3 du second signal de référence de mesure de positionnement et l'instant d'arrivée T2 du second signal de référence de mesure de positionnement ; et

les premières informations d'angle comprennent :

l'angle d'arrivée, AOA1, du premier signal de référence de mesure de positionnement ; et/ou

l'angle de départ, AOD1, du second signal de référence de mesure de positionnement ;

dans lequel le procédé comprend également :

la mesure, par le nœud de référence, des deuxièmes informations de positionnement sur le premier chemin de transmission sur la base des premières informations d'indication ;

dans lequel la mesure, par le nœud de référence, des deuxièmes informations de positionnement sur le premier chemin de transmission sur la base des premières informations d'indication comprend :

l'enregistrement, par le nœud de référence, d'un instant d'arrivée T4 du second signal de référence de mesure de positionnement ; et

la mesure, par le nœud de référence, d'un angle d'arrivée, AOA2, du second signal de référence de mesure de positionnement ;

dans lequel le procédé comprend également :

l'enregistrement, par le nœud de référence, d'un instant d'envoi T1 du premier signal de référence de mesure de positionnement ; et/ou

la mesure, par le nœud de référence, d'un angle de départ, AOD2, du premier signal de référence de mesure de positionnement ;

dans lequel le procédé comprend également :

l'envoi (S512), par le nœud de référence, de quatrièmes informations de positionnement au nœud de service de localisation, dans lequel les quatrièmes informations de positionnement comprennent de secondes informations de temps, ou les quatrièmes informations de positionnement comprennent de secondes informations de temps et de secondes informations d'angle, dans lequel

les secondes informations de temps comprennent :

l'instant d'arrivée T4 du second signal de référence de mesure de positionnement et l'instant d'envoi T1 du premier signal de référence de mesure de positionnement ; ou

une différence T4 - T1 entre le moment d'arrivée T4 du second signal de référence de mesure de positionnement et l'instant d'envoi T1 du premier signal de référence de mesure de positionnement ; et

les secondes informations d'angle comprennent :

l'angle d'arrivée, AOA2, du second signal de référence de mesure de positionnement ; et/ou

l'angle de départ, AOD2, du premier signal de référence de mesure de positionnement ;

dans lequel le procédé comprend également :

le positionnement, par le nœud de service de localisation, du nœud à positionner sur la base des troisièmes informations de positionnement et des quatrièmes informations de positionnement ;

dans lequel le positionnement, par le nœud de service de localisation, du nœud à positionner sur la base des troisièmes informations de positionnement et des quatrièmes informations de positionnement comprend :

la détermination, par le nœud de service de localisation, d'un temps d'aller-retour sur la base des premières informations de temps et des secondes informations de temps ;

le calcul, par le nœud de service de localisation, d'informations de positionnement du nœud à positionner sur la base du temps de trajet aller-retour, de l'AOA1 dans les premières informations d'angle, et de l'AOD2 dans les secondes informations d'angle ;

le calcul, par le nœud de service de localisation, des informations de positionnement du nœud à positionner sur la base du temps de trajet aller-retour, de l'AOD1 dans les premières informations d'angle, et de l'AOA2 dans les secondes informations d'angle ;

le calcul, par le nœud de service de localisation, des informations de positionnement du nœud à positionner sur la base du temps de trajet aller-retour, d'une valeur pondérée de l'AOA1 et de l'AOD1 dans les premières informations d'angle, et de l'AOA2 dans les secondes informations d'angle ;

le calcul, par le nœud de service de localisation, des informations de positionnement du nœud à positionner sur la base du temps de trajet aller-retour, de la valeur pondérée de l'AOA1 et de l'AOD1 dans les premières informations d'angle, et de l'AOD2 dans les secondes informations d'angle ;

la calcul, par le nœud de service de localisation, des informations de positionnement du nœud à positionner sur la base du temps de trajet aller-retour, de la valeur pondérée de l'AOA1 et de l'AOD1 dans les premières informations d'angle, et d'une valeur pondérée de l'AOA2 et de l'AOD2 dans les secondes informations d'angle ;

le calcul, par le nœud de service de localisation, des informations de positionnement du nœud à positionner sur la base du temps de trajet aller-retour, de l'AOA1 dans les premières informations d'angle, et de la valeur pondérée de l'AOA2 et de l'AOD2 dans les secondes informations d'angle ; ou

le calcul, par le nœud de service de localisation, des informations de positionnement du nœud à positionner sur la base du temps de trajet aller-retour, de l'AOD1 dans les premières informations d'angle, et la valeur pondérée de l'AOA2 et de l'AOD2 dans les secondes informations d'angle.

**2.** Procédé selon la revendication 1, dans lequel le premier chemin de transmission est un chemin de première arrivée ou un chemin le plus fort, le premier signal de référence de mesure de positionnement a un retard de transmission le plus faible sur le chemin de première arrivée, le premier signal de référence de mesure de positionnement a la plus faible atténuation sur le chemin le plus fort, et le procédé comprend également :
la détermination, par le nœud à positionner, du premier chemin de transmission sur la base d'un retard de transmission et/ou d'une puissance de signal du premier signal de référence de mesure de positionnement.

**3.** Procédé selon la revendication 2, dans lequel les premières informations sont représentées par des informations 1-bit, et que les premières informations d'indication sont utilisées pour indiquer des informations sur le premier chemin de transmission comprend :

lorsque le premier chemin de transmission est le chemin de première arrivée, les premières informations d'indication sont 1 ; et
lorsque le premier chemin de transmission est le chemin le plus fort, les premières informations d'indication sont 0 ; ou
lorsque le premier chemin de transmission est le chemin de première arrivée, les premières informations d'indication sont 0 ; et
lorsque le premier chemin de transmission est le chemin le plus fort, les premières informations d'indication sont 1.

**4.** Procédé selon l'une quelconque des revendications 1 à 3, dans lequel les premières informations d'indication sont transportées dans des informations d'état de canal.

**5.** Procédé selon la revendication 4, dans lequel les informations d'état de canal comprennent également mais ne se limitent pas à :
des informations d'indicateur de matrice de précodage PMI, des informations d'indicateur de qualité de canal, CQI, et des informations d'un indicateur de rang RI d'une matrice de canal.

**6.** Système de positionnement à ancre unique à multiples chemins comprenant un nœud à positionner, un nœud de référence et un nœud de service de localisation configuré pour mettre en œuvre le procédé selon l'une quelconque des revendications 1 à 5.

FIG. 1

FIG. 2

Receive a first positioning measurement reference signal transmitted through N transmission paths, where the first positioning measurement reference signal is sent by a reference node, and N is an integer greater than 1 — S301

Measure first positioning information based on the first positioning measurement reference signal on a first transmission path, where the first transmission path is one of the N transmission paths — S302

Send first indication information and a second positioning measurement reference signal to the reference node, where the first indication information is used to indicate the first transmission path, so that the reference node measures second positioning information on the first transmission path — S303

FIG. 3

Receive a first positioning measurement reference signal transmitted through N transmission paths, where the first positioning measurement reference signal is sent by a reference node, and N is an integer greater than 1 — S401

Measure first positioning information based on first intermediate information, where the first intermediate information includes a DFT base vector corresponding to a first transmission path in a precoding matrix, and the first transmission path is one of the N transmission paths — S402

Send first indication information and a second positioning measurement reference signal to the reference node, where the first indication information is used to indicate the first intermediate information, so that the reference node measures second positioning information based on the first intermediate information indicated by the first indication information — S403

FIG. 4

| To-be-positioned node | Reference node | Location service node |
|---|---|---|

**Before positioning measurement**

S501: Positioning request →

← S502: Positioning request acknowledgment

S503(a): Positioning capability →

S503(b): Positioning capability →

← S504: Positioning assistance information

S505(a): Positioning measurement request ←

S505(b): Positioning measurement request →

**During positioning measurement**

S506: First positioning reference signal

T2 ← T1

S507: Calculate first positioning information (including an arrival moment T2, AOA1 and/ or AOD1 of a first transmission path, or an RSPS) on the transmission path

S508: First indication information →

S509: Second positioning reference signal

T3 → T4

S510: Calculate second positioning information (including an arrival moment T4, AOA2 and/or AOD2 of the transmission path, or T4 − T1) on the first transmission path based on the first indication information

S511: Third positioning information →

S512: Fourth positioning information →

FIG. 5

| CQI | RI | PMI | CMPI |
|-----|-----|-----|------|

FIG. 6

FIG. 7(a)

FIG. 7(b)

UCI part 1: $K_{NZ,\,TOT}$ | RI | CQI

UCI part 2: Bitmaps per layer | SCI | Frequency domain basis subset selection indicator | LC coefficients | Spatial domain basis subset selection indicator | Spatial domain oversampling factor | CMPI

| $K_{NZ, TOT}$ | RI | CQI | Bitmaps per layer | SCI | Frequency domain basis subset selection indicator | LC coefficients | Spatial domain basis subset selection indicator | Spatial domain oversampling factor | CMPI |
|---|---|---|---|---|---|---|---|---|---|

UCI part 1                                    UCI part 2                                    UCI part 3

FIG. 7(c)

EP 4 181 537 B1

Communication node 800

Receiving
module ⌐ 801

Processing
module ⌐ 802    Sending
module ⌐ 803

FIG. 8

Communication node 900

Sending
module ⌐ 901

Receiving
module ⌐ 902    Processing
module ⌐ 903

FIG. 9

Communication node 1000

Receiving module ⟍ 1001

Processing module ⟍ 1002

FIG. 10

Communication apparatus 1100

Processor ⟍ 1101    Memory ⟍ 1103

⟍ 1104

Communication interface ⟍ 1102

FIG. 11

**EP 4 181 537 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104662436 A
- US 2017026798 A1